# EUROPEAN PATENT APPLICATION

(11) **EP 4 614 696 A1**
(43) Date of publication of application: **10.09.2025**
(21) Application number: 24162088.9
(22) Date of filing: 07.03.2024
(51) Int. Cl.: H01M 50/209, H01M 50/507, H01M 50/548, H01M 50/51, H01M 50/514, H01M 50/289, H01M 10/04, H01M 10/613, H01M 10/625, H01M 10/6554

(54) **BATTERY MODULE AND BATTERY PACK WITH STRUCTURALLY INTEGRATED ARRANGEMENT FOR SIDE TERMINAL CELLS**

(71) Applicant: Samsung SDI Co., Ltd., Yongin-si, Gyeonggi-do 17084 (KR)
(72) Inventor: Pröll, Andreas Peter, 4184 Helfenberg (AT)
(74) Representative: Gulde & Partner

(57) **Abstract**

The present disclosure refers to a type of battery module with a structure providing similar energy densities as cell-to-pack approaches, while allowing for simplified assembling, especially for side-terminal battery cells. Furthermore, the present disclosure relates to a type of battery module with a lightweight design, while at the same time has improved capabilities for load transferring. Moreover, the present disclosure provides a battery pack including such battery modules. Also, the present disclosure provides a method for simple assembling such a battery module.

## Description

### Field of the Disclosure

The present disclosure relates to a battery module with side terminal, a battery pack including the battery module, a vehicle including the battery module and a method for assembling the battery module.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

A single battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells coupled to each other in series or in parallel. For example, the battery module may be formed by interconnecting the electrode terminals of the plurality of battery cells in an arrangement or configuration depending on a desired amount of power and in order to realize a high-power rechargeable battery.

Battery modules can be constructed either in a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series for providing a desired voltage.

A battery pack is a set of any number of (for example identical) battery modules or single battery cells. The battery modules, respectively battery cells, may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the advantages and disadvantages of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as heaters, fans, air conditioning or liquid cooling means.

The mechanical integration of such a battery pack incorporates suitable mechanical connections between the individual components, for examples, of battery modules, and between them and a supporting structure of the vehicle. These connections are designed to must remain functional and save throughout the average service life of the battery system. Further, installation space and interchangeability standards must be met, especially in mobile applications.

Mechanical integration of battery modules may be achieved by providing a carrier framework and by positioning the battery modules thereon. Fixing the battery cells or battery modules may be achieved by using fitted depressions in the framework or by mechanical interconnectors such as bolts or screws. In other example, the battery modules are confined by fastening side plates to lateral sides of the carrier framework. Moreover, cover plates may be fixed atop and below the battery modules.

The carrier framework of the battery pack is mounted to a carrying structure of the vehicle. When the battery pack is fixed at the bottom of the vehicle, the mechanical connection may be established from the bottom side by for example bolts passing through the carrier framework of the battery pack. The framework is generally made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually include a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further include a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, which may cause that the battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (typically above 150°C) it can transit into a thermal runaway. Generally, temperatures outside of the safe region on either the low or high side may lead to irreversible damage to the battery and therefore may possible trigger thermal runaway. Thermal runaway may also occur due to an internal or external short circuit of the battery or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack. In the worst case, the high temperatures lead to the process spreading to neighboring cells and fire in the battery pack. At this stage, the fire is hardly to extinguish.

A battery management system, BMS, is critical to the safe operation and optimal performance of secondary batteries and helps minimize the possibility of thermal runaway. For example, if the BMS detects that the temperature is too hot, it can regulate the temperature by controlling cooling fans. Alternatively, if the battery or cell cannot be cooled and safe conditions restored, the BMS may shut down necessary cells to protect the entire system.

As pointed out above, secondary batteries (e. g., Li-Ion batteries) in battery electric vehicles are mounted into specifically designed housings, in which the individual cells are electrically connected to each other. Furthermore, the housings commonly provide a certain thermo management for the battery cells and protect them from mechanical intrusion or damage. In case of prismatic or pouch cells, the housing or a sub-component needs to maintain a certain compression of these cells and act against the cells' swelling forces to prevent accelerated ageing.

In one kind of prior art, multiple battery cells are arranged in modules. These act as sub-component for the battery housing, interconnect the battery cells to a certain circuitry and carry swelling forces of one or more stacks of battery cells. A stack of battery cells may contain multiple prismatic or pouch cells and cell spacers / distance holders or compression pads. In the prior art, battery modules generally do not significantly contribute to the housing stiffness, which means that the housing needs to protect the modules from mechanical abusing loadcases by carrying and transferring all external loadings.

In newer designs, one or more stacks of battery cells may be directly inserted into the battery housing, which carries the swelling forces. This principle is called "cell-to-pack" or "cell-to-vehicle" and leads to reduced costs as well as higher volumetric and gravimetric energy densities on pack level but comes with the drawback of more complicated assembly as well as reduced ability for later disassembly. Former drawback is especially problematic with side terminal cells (prismatic or pouch), where the cell interconnecting busbars have to be applied to the stack of battery cells on two opposing sides before it is inserted into the housing.

Hence, there is a need for a type of battery module with a structure providing similar energy densities as cell-to-pack approaches (see above), while providing simplified assembling, especially for side-terminal (side-pole) battery cells. Furthermore, there is a need for a type of battery module having a lightweight design, while at the same time providing improved capabilities for load transferring. Moreover, there is a need for a battery pack including such battery modules. Also, there is a need for a method for simple assembling such a battery module.

It is thus an object of the present disclosure to provide a type of battery module with a structure providing similar energy densities as cell-to-pack approaches (see above), while allowing for simplified assembling, especially for side-terminal (side-pole) battery cells. Furthermore, it is an object of the present disclosure to provide a type of battery module having a lightweight design, while at the same time exhibiting improved capabilities for load transferring. Moreover, it is an object of the present disclosure to provide a battery pack including such battery modules. Also, it is an object of the present disclosure to provide a method for simple assembling such a battery module.

### Summary of Invention

The invention is defined by the appended claims. The description that follows is subjected to this limitation. Any disclosure lying outside the scope of said claims is only intended for illustrative as well as comparative purposes.

According to a first aspect of the present disclosure, a battery module is provided, the battery module including: a stack of battery cells, the stack including a plurality of battery cells arranged in a row along a predefined stack direction; each of the battery cells including a hardcase having a parallelepiped shape with a pair of main sides arranged opposite to each other, a first terminal side and a second terminal side arranged opposite to each other, and a lower side and an upper side arranged opposite to each other, wherein the main sides of each of the battery cells are arranged perpendicular to the stack direction; each of the battery cells including a first terminal arranged on the first terminal side and a second terminal arranged on the second terminal side, the first terminal forming one electrical pole of the battery cell and the second terminal forming the opposite electrical pole of the battery cell; a first beam including one or more first openings, and a second beam including one or more second openings; one or more first busbars, and one or more second busbars; wherein each of the first beam and the second beam is arranged parallel to the stack direction and has a first end pointing against the stack direction and a second end pointing into the stack direction; wherein the stack is arranged in between the first beam and the second beam; wherein first terminal side of each of the battery cells faces the first beam, and wherein the second terminal side of each of the battery cells faces the second beam; wherein each of the first busbars electrically connects, by means of at least two first connections, the first terminals of at least two battery cells and is arranged between the stack and the first beam; and wherein each of the second busbars electrically connects, by means of at least two second connections, the second terminals of at least two battery cells and is arranged between the stack and the second beam; and wherein the first openings are located at least at some of the positions of the first connections; and wherein the second openings are located at least at some of the positions of the second connections.

According to a second aspect of the present disclosure, a battery pack is provided, the battery pack including at least one battery module according to the first aspect.

A third aspect of the present disclosure relates to a vehicle including at least one battery module according to the first aspect and/or at least one battery pack according to the second aspect.

A fourth aspect of the present disclosure refers to a method for assembling a battery module according to the first aspect, the method including the following steps:
a) providing a first beam including one or more first openings, a second beam including one or more second openings, one or more first busbars, one or more second busbars, and a plurality of battery cells, each of the battery cells including a hardcase having a parallelepiped shape with a pair of main sides arranged opposite to each other, a first terminal side and a second terminal side arranged opposite to each other, and a lower side and an upper side arranged opposite to each other, wherein each battery cell includes a first terminal arranged on the first terminal side and a second terminal arranged on the second terminal side;
b) arranging the battery cells into a stack directed into a predefined stack direction such that the main sides of each battery cell are arranged perpendicular to the stack direction;
c) attaching the first busbars to the first beam at predefined positions, and attaching the second busbars to the second beam at predefined positions;
d-1) arranging the first beam along the stack such that each of the first terminal sides faces the first beam, wherein the first beam is oriented such that the first busbars are each positioned between the first beam and the stack;
d-2) arranging the second beam along the stack such that each of the second terminal sides faces the second beam, wherein the second beam is oriented such that the second busbars are each positioned between the second beam and the stack;
e-1) pushing the first beam such onto the stack that the first busbars abut against the first terminals located in the area of the first busbars, and connecting the first busbars to the first terminals located in the area of the first busbars, wherein the connecting is performed using the access to the first busbars provided by the first openings;
e-2) pushing the second beam such onto the stack that the second busbars abut against the second terminals located in the area of the second busbars, and connecting the second busbars to the second terminals located in the area of the second busbars, wherein the connecting is performed using the access to the second busbars provided by the second openings.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1A: illustrates a perspective view of a side-pole battery cell according to an embodiment of the present disclosure.
- Fig. 1B: illustrates a perspective view of a side-pole battery cell according to other embodiment of the present disclosure.
- Fig. 2: schematically illustrates perspective view of a battery module according to an embodiment of the present disclosure.
- Fig. 3: schematically illustrates an explosion view of an assembly of a first beam and a first busbar carrier.
- Fig. 4: schematically illustrates a partial explosion view of the battery module of Fig. 2 (without busbar covers).
- Fig. 5: schematically illustrates a partial perspective view of the battery module of Fig. 2.
- Fig. 6: schematically illustrates a partial perspective view of the battery module of Fig. 2 (without busbar cover).
- Fig. 7: schematically illustrates explosion view of the battery module of Fig. 2.
- Fig. 8: schematically illustrates schematic cross-section view of a battery pack according to other embodiment of the present disclosure.
- Fig. 9: schematically illustrates a perspective view of a battery module according to other embodiment of the present disclosure.
- Fig. 10A: schematically illustrates a perspective view of a first beam of the battery module of Fig. 9.
- Fig. 10B: schematically illustrates other perspective view of the first beam of the battery module of Fig. 9.
- Fig. 11: illustrates an enlarged view of the first beam of Fig. 10A.
- Fig. 12: schematically illustrates a perspective view of a skeleton built by a plurality of busbars and other components connected to busbars.
- Fig. 13: schematically illustrates a perspective view of a battery pack including the battery modules of Fig. 9.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e. g., on a PCB or another kind of circuit carrier. The conducting elements may comprise metallization, e. g., surface metallization and/or pins, and/or may comprise conductive polymers or ceramics. Further electrical energy might be transmitted via wireless connections, e. g., using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to a first aspect of the present disclosure, a battery module includes: a stack of battery cells, the stack including a plurality of battery cells arranged in a row along a predefined stack direction; each of the battery cells including a hardcase having a parallelepiped shape with a pair of main sides arranged opposite to each other, a first terminal side and a second terminal side arranged opposite to each other, and a lower side and an upper side arranged opposite to each other, wherein the main sides of each battery cell are arranged perpendicular to the stack direction; each battery cell including a first terminal arranged on the first terminal side and a second terminal arranged on the second terminal side, the first terminal forming one electrical pole of the battery cell and the second terminal forming the opposite electrical pole of the battery cell; a first beam including one or more first openings, and a second beam including one or more second openings; one or more first busbars, and one or more second busbars; wherein each of the first beam and the second beam is arranged parallel to the stack direction and has a first end pointing against the stack direction and a second end pointing into the stack direction; wherein the stack is arranged in between the first beam and the second beam; wherein first terminal side of each battery cell faces the first beam, and wherein the second terminal side of each battery cell faces the second beam; wherein each of the first busbars electrically connects, by means of at least two first connections, the first terminals of at least two battery cells and is arranged between the stack and the first beam; and wherein each of the second busbars electrically connects, by means of at least two second connections, the second terminals of at least two battery cells and is arranged between the stack and the second beam; and wherein the first openings are located at least at some of the positions of the first connections; and wherein the second openings are located at least at some of the positions of the second connections.

Accordingly, the present disclosure provides a battery module with so-called "side-pole battery cells," wherein the battery module exhibits a similar energy density as cell-to-pack approaches, while at the same time providing simplified assembling. Also, the disclosed battery module includes load transferring capabilities which increases the potential for a lightweight design. The above-described type of battery module includes a structure, which provides a similar energy density as cell-to-pack approaches (see above), while allowing for a simplified assembling, especially for side-terminal / side-pole battery cells. Furthermore, the disclosed battery module may utilize the hardcases (i. e., stiff cases, barrels, or cans) of the side-terminal battery cells for further load transferring capability crossways the battery module, which leads to significant load transferring capability in all three spatial directions. This leads to significantly increased potential for lightweight design.

The first aspect of the present disclosure may hence be briefly summarized as providing a structurally integrated modular type assembly concept for stacks of battery cells including side-terminal battery cells.

In particular, the first openings provide access to the locations, where the first connections are positioned, and the second openings provide access to the locations, where the second connections are positioned. Hence, during manufacture of the battery module and/or when repairing the battery module, the first openings as well as the second openings provide access to the locations, where the connections are to be established (or, during reparation of the battery module, loosened).

In embodiments, some or all of the first connections and the second connections may be established by welding (e. g., fusion-welding). Also, some or all of the first connections and the second connections may be established by screwing or clipping.

In embodiments, some or all of the first and second connections may be covered with busbar covers, which ensure sufficient creep distances.

The battery module according to the first aspect is in particular suitable for transferring compressing loadings along the stack direction (i. e., in or against the stack direction).

The battery module according to the first aspect is in particular suitable for transferring compressing loadings acting transverse to the stack direction, and in particular, compressing loadings acting perpendicular to the terminal sides of the battery cells. This is made possible by the fact that the battery cells each include a hardcase.

The battery module according to the first aspect is also suitable for absorbing shear forces acting in a direction transverse to the stack direction and/or in a direction transverse to the direction perpendicular to the first and second terminal sides. Those shear forces may be exerted on a battery module by a battery pack's loadcases, when the battery module is mounted into this battery pack (see the second aspect of the present disclosure described below). This is made possible by the beams as well as by the fact that the battery cells each include a hardcase.

In the battery module according to the first aspect of the present disclosure, the first terminal side and the second terminal side of each battery cell may be arranged perpendicular to a predefined first transverse direction not being parallel to the stack direction, and the lower side and the upper side of each battery cell may be arranged perpendicular to a predefined second transverse direction not being parallel to each of the stack direction and the first transverse direction.

In embodiments of the battery module, the stack direction is perpendicular to the first transverse direction. In embodiments of the battery module, the stack direction is perpendicular to the second transverse direction. In embodiments of the battery module, the first transverse direction is perpendicular to the second transverse direction. In preferred embodiments of the battery module, any two of the stack directions, the first transverse direction, and the second transverse direction are perpendicular to each other. In the latter case, the hardcase of each of the battery cells has a cuboid shape.

In embodiments of the battery module, the hardcase of at least one battery cell is made of metal. In preferred embodiments of the battery module, the hardcase of each of the battery cells is made of metal.

In embodiments of the battery module, for each battery cell, the (equally sized) main sides may be the sides having the largest areas in comparison with the remaining sides (i. e., the lower side, the upper side, the first terminal side, and the second terminal side) of that battery cell.

In embodiments of the battery module, for each battery cell, the (equally sized) terminal sides (i. e., the first terminal side and the second terminal side) may be the sides having the smallest areas in comparison with the remaining sides (i. e., the main sides, the lower side, and the upper side) of that battery cell.

In preferred embodiments of the battery module according to the first aspect, the first openings are located at each of the positions of the first electrical connections, and/or the second openings are located at each of the positions of the second electrical connections.

The terms "lower side" and "upper side" have been chosen for the sake of intelligibility. Alternatively, without altering or departing from the subject-matter of the first aspect, the term "lower side" could be replaced, e. g., by the term "first lateral side" or "first cover side," and the term "upper side" could be replaced, e. g., by the term "second lateral side" or "second cover side."

In embodiments, the first beam includes a lower shoulder an upper shoulder, each of the lower and upper shoulder extending along the stack direction and being distanced to each other. Then, the lower shoulder may be connected to the upper shoulder by a plurality of struts. In such embodiments, the first openings may be formed (with regard to the stack direction) by the interstices between the struts and (with regard to a direction perpendicular to the stack direction) by the interstice between the lower and the upper shoulder.

In embodiments, the second beam includes a lower shoulder an upper shoulder, each of the lower and upper shoulder extending along the stack direction and being distanced to each other. Then, the lower shoulder may be connected to the upper shoulder by a plurality of struts. In such embodiments, the first openings may be formed (with regard to the stack direction) by the interstices between the struts and (with regard to a direction perpendicular to the stack direction) by the interstice between the lower and the upper shoulder.

In embodiments, the module may be configured to be clamped, with regard to a direction perpendicular to the lower side and upper side of the battery cells, using the first beam and/or the second beam.

In one embodiment of the battery module according to the first aspect, the battery module further includes a first end-plate and a second end-plate; wherein the first end-plate is attached to the first end of the first beam and the first end of the second beam, and abuts against the battery cell arranged at the first position in the row of battery cells when viewing into the stack direction; and wherein the second end-plate is attached to the second end of the first beam and the second end of the second beam, and abuts against the battery cell arranged at the last position in the row of battery cells when viewing into the stack direction.

This way, the battery cells of the battery module can be compressed along the stack direction, the load caused by this compression being absorbed by the beams due to the attachment (i. e., mechanical connection) of the first and second end-plates to the first and second beams. Also, swelling forces arising from an expansion of the battery cells with respect to the stack direction (e. g., during use of the battery module or due to aging of the battery module) may then be transmitted by the end-plates to the beams and then absorbed by the beams.

With the above-described embodiment, busbar welding may be done on both terminal sides in final pre-compression state of the stack of battery cells, since the beams and endplate carry the loadings.

In embodiments of the battery module, the first end plate may include first mounting points. Specifically, the first mounting points may be configured for mounting the battery module into a battery pack (see second aspect of the disclosure described below). Correspondingly, the second end plate may include second mounting points. Specifically, the second mounting points may be configured for mounting the battery module into a battery pack (see second aspect of the disclosure described below).

In embodiments of the battery module, the first end-plate and/or the second end-plate may include at least one pocket and/or at least one holder configured for accommodating or holding cell sensing and/or balancing boards.

In embodiments of the battery module, the first end-plate and/or the second end-plate may be made of polymeric material.

In embodiments of the battery module, the first end-plate and/or the second end-plate may be made of metallic material.

In one embodiment of the battery module according to the first aspect, the electrical polarity of the first terminals alternates, when viewing into the stack direction. Further, the sum of the number of the first busbars and the number of the second busbars equals to (N - 1), with N denoting the number of battery cells included in the battery module. When viewing into the stack direction and for each natural number k with 1 ≤ k < N/2, the first terminal of the (2k)-th battery cell is electrically connected, via one of the first busbars, to the first terminal of the (2k+1)-th battery cell. Also, when viewing into the stack direction an d for each natural number k with 1 ≤ k ≤ N/2, the second terminal of the (2k - 1)-th battery cell is electrically connected, via one of the second busbars, to the second terminal of the (2k)-th battery cell.

Since for every battery cell, the second terminal forms a pole having an electrical polarity opposite to the electrical polarity of its first terminal, it follows that the electrical polarity of the second terminals alternates as well in the afore-mentioned embodiment, when viewing into the stack direction.

In other words, in such embodiment, the battery cells of the module are electrically connected in series.

In the afore-described embodiment, the first terminal of the first battery cell (when viewing into the stack direction) may form the battery module's first terminal. Moreover, when the number of battery cells in the battery module is odd, the second terminal of the last battery cell (when viewing into the stack direction) may form the battery module's second terminal. Alternatively, when the number of battery cells in the battery module is even, the first terminal of the last battery cell (when viewing into the stack direction) may form the battery module's second terminal.

In the afore-mentioned embodiment, the electrical polarity of the first terminal of the battery cell arranged first when viewing into the stack direction may be negative (and accordingly, in such a case, the electrical polarity of the second terminal of the battery cell arranged first when viewing into the stack direction is positive). Alternatively, the electrical polarity of the first terminal of the battery cell arranged first when viewing into the stack direction may be positive (and accordingly, in the latter case, the electrical polarity of the second terminal of the battery cell arranged first when viewing into the stack direction is negative).

For example, when viewing into the stack direction, the first terminal of the first battery cell forms a negative electric pole, the first terminal of the second battery cell forms a positive electric pole, the first terminal of the third battery cell forms a negative electric pole in turn, etc. Then, the positive pole of the first battery cell (i. e., second terminal of the first battery cell) is connected to the negative pole of the second battery cell (i. e., the second terminal of the second battery cell). Further, the positive pole of the second battery cell (i. e., the first terminal of the second battery cell) is connected to the negative pole of the third battery cell (i. e., the first terminal of the third battery cell), etc.

In alternative embodiments of the battery module according to the first aspect of the disclosure, the electrical polarity of each of the first terminals is identical (e. g., negative), and further, the electrical polarity of each of the second terminals is identical, thereby being opposite to the polarity of the first terminals (e. g., negative). Also, in this embodiment, the battery module includes only two busbars, viz. a single first busbar and a single second busbar. The first busbar is connected to each of the first terminals, and the second busbar is connected to each of the second terminals. In other words, in such an embodiment of a battery module according to the first aspect, the battery cells are connected to each other in parallel. Here, the first busbar may form a first terminal of the battery module, and the second busbar may form a second terminal of the battery module.

In one embodiment of the battery module according to the first aspect, the battery module further includes: a first cell connect unit, the first cell connect unit including a first busbar carrier holding the first busbars; and/or a second cell connect unit, the second cell connect unit including a second busbar carrier holding the second busbars.

The first busbar carrier may be made of an insulating material (such as plastics). This way, the first busbars are electrically insulated from each other and from the first beam. Also, the insulating first busbar carrier may cover the whole first terminal side of each of the battery cells, thus providing increased electric isolation of the battery cells to the first beam (if the latter is made of an electrical conducting material) and also providing for tolerance compensation.

Alternatively, an insulating layer may be inserted between any one of the first busbars and the first busbar carrier.

Correspondingly, the second busbar carrier may be made of an insulating material (such as plastics). This way, the second busbars are electrically insulated from each other and from the second beam. Also, the insulating second busbar carrier may cover the whole second terminal side of each of the battery cells, thus providing increased electric isolation of the battery cells to the second beam (if the latter is made of an electrical conducting material) and also providing for tolerance compensation.

Alternatively, an insulating layer may be inserted between any one of the second busbars and the second busbar carrier.

Some or all of first busbars may be overmolded or clipped or glued into the first busbar carrier. Also, some or all of the second busbars may be overmolded or clipped or glued into the second busbar carrier.

In one embodiment of the battery module according to the first aspect, the first cell connect unit is arranged between the stack and the first beam; and/or the second cell connect unit is arranged between the stack and the second beam.

In one embodiment, the battery module further includes: a first cover arranged on the side of the first beam, which faces away from the stack; and/or a second cover arranged on the side of the second beam, which faces away from the stack.

Hence, by the first cover, the first beam as well as the first busbars visible/accessible through the openings in the first beam are covered and thus protected by the first cover. Similarly, by the second cover, the second beam as well as the second busbars visible/accessible through the openings in the second beam are covered and thus protected by the second cover.

In one embodiment of the battery module according to the first aspect, for at least one pair of neighbored battery cells included in the stack, a cell spacer is arranged between the battery cells of this pair.

Cell spacers (also called distance plates) may be used to improve the thermal and/or the structural (mechanical) behavior of the battery module. Specifically, in embodiments, a cell spacer may be inserted into the stack after every n battery cells.

In one embodiment of the battery module, one of the cell spacers includes a module management controller.

In one embodiment of the battery module, the battery module includes a first sub-module and a second sub-module, the first sub-module being separated from the second sub-module by the cell spacer including the module management controller; and, when viewing into the stack direction, the first sub-module includes the battery cells of the stack in front of the cell spacer including the module management controller, and the second sub-module includes the battery cells of the stack behind the cell spacer including the module management controller.

In embodiments, the battery cells of the first sub-module are connected in series and/or the battery cells of the second sub-module are connected in series. In embodiments, the battery cells of the first sub-module are connected in series and the battery cells of the second sub-module are connected in parallel. In embodiments, the battery cells of the first sub-module are connected in parallel and the battery cells of the second sub-module are connected in series. In embodiments, the battery cells of the first sub-module are connected in series and/or the battery cells of the second sub-module are connected in parallel.

In one embodiment of the battery module, the battery cells are each thermally connected to at least one module cooling plate.

In embodiments, a lower module cooling plate is provided along the lower sides of the battery cells, and each of the battery cells abuts, with its lower side, against the lower module cooling plate. Additionally or alternatively, an upper module cooling plate is provided along the upper sides of the battery cells, and each of the battery cells abuts, with its upper side, against the upper module cooling plate.

Here, the terms "lower module cooling plate" and "upper module cooling plate" have been chosen for the sake of intelligibility. Alternatively, without altering or departing from the subject-matter of the afore-described embodiment, the term "lower module cooling plate" could be replaced, e. g., by the term "first module cooling plate," and the term "upper module cooling plate" could be replaced, e. g., by the term "second module cooling plate."

The lower module cooling plate may be glued over the entire surface formed by the lower sides of the battery cells or the essentially entire surface of the stack formed by the lower sides of the battery cells. Correspondingly, the upper module cooling plate may be glued over the entire surface of the stack formed by the upper sides of the battery cells or the essentially entire surface of the stack formed by the upper sides of the battery cells.

In one embodiment of the battery module according to the first aspect, the battery module further includes: a module venting plate provided along the lower sides of the battery cells; and a module cooling plate provided along the upper sides of the battery cells; wherein each of the battery cells abuts, with its lower side, against the module venting plate; and wherein the module cooling plate is thermally connected to each of the upper sides of the battery cells.

In the afore-described embodiment, the module venting plate may be glued over the entire surface of the stack formed by the lower sides of the battery cells or the essentially entire surface of the stack formed by the lower sides of the battery cells. Further, the module cooling plate may be glued over the entire surface of the stack formed by the upper sides of the battery cells or the essentially entire surface of the stack formed by the upper sides of the battery cells.

The afore-described plates (cooling plates and/or venting plates) also provide final (mechanical) support to the battery cells included in the battery module for shock loadings. Otherwise, i. e., without plates, the battery cells may be held by the busbar welds only. Hence, in the afore-described embodiments using at least one plate (cooling plates and/or venting plates), the shock resistance of the battery module becomes improved in comparison to a bare module without plates.

According to a second aspect of the present disclosure, a battery pack includes at least one battery module according to the first aspect or any one of the above-described embodiments of the first aspect.

Embodiments of the battery pack according to the second aspect may include at least one pack cooling plate. In particular, one or more module cooling plates of the battery modules included in the battery pack may be formed by respective portions of the pack cooling plate.

For example, the battery pack may include a lower pack cooling plate. Then, at least some of the lower module cooling plates of at least some of the battery modules may be formed as part of the lower pack cooling plate. Alternatively or additionally, the battery pack may include an upper pack cooling plate. Then, at least some of the upper module cooling plates of at least some of the battery modules may be formed as part of the upper pack cooling plate.

Embodiments of the battery pack according to the second aspect may include at least one pack venting plate. In particular, one or more module venting plates of the battery modules included in the battery pack may be formed by respective portions of the pack venting plate.

In embodiments of the battery pack according to the second aspects of the disclosure or any one of its above-described embodiments, the battery pack further includes a battery pack housing configured for accommodating at least one battery module. The battery pack housing may include a load bearing structure, wherein the at least one battery module forms a part of the load bearing structure.

In embodiments of the battery pack, the first beams of at least some of the battery modules may act as stiffening ribs for the housing of the battery pack. Alternatively or additionally, the second beams of at least some of the battery modules may act as stiffening ribs for the housing of the battery pack.

In embodiments of the battery pack, at least some of the battery modules included in the battery pack are mounted and/or fixed to the housing of the battery pack via at least one of their respective end-plates. Each battery module included in the battery pack is mounted and/or fixed to the housing of the battery pack via at least one, each, of its end-plates.

In particular, at least some of the battery modules are fixed to the (remaining) load bearing structure of the battery pack housing via at least one their respective end-plates.

In embodiments of the battery pack, the load bearing structure includes shoulders or cross-braces, at least some of the cross-braces being configured for transmitting compression forces onto the beams of the battery modules.

A third aspect of the present disclosure relates to a vehicle including at least one battery module according to the first aspect or any one of the embodiments of the first aspect, and/or at least one battery pack according to the second aspect or any one of the embodiments of the second aspect.
, the vehicle is a hybrid vehicle or a fully electric vehicle.

A fourth aspect of the present disclosure relates to a method for assembling a battery module according to the first aspect or any one of the embodiments of the fourth aspect, the method including the following steps:
a) providing a first beam including one or more first openings, a second beam including one or more second openings, one or more first busbars, one or more second busbars, and a plurality of battery cells, each of the battery cells including a hardcase having a parallelepiped shape with a pair of main sides arranged opposite to each other, a first terminal side and a second terminal side arranged opposite to each other, and a lower side and an upper side arranged opposite to each other, wherein each battery cell includes a first terminal arranged on the first terminal side and a second terminal arranged on the second terminal side;
b) arranging the battery cells into a stack directed into a predefined stack direction such that the main sides of each battery cell are arranged perpendicular to the stack direction;
c) attaching the first busbars to the first beam at predefined positions, and attaching the second busbars to the second beam at predefined positions;
d-1) arranging the first beam along the stack such that each of the first terminal sides faces the first beam, wherein the first beam is oriented such that the first busbars are each positioned between the first beam and the stack;
d-2) arranging the second beam along the stack such that each of the second terminal sides faces the second beam, wherein the second beam is oriented such that the second busbars are each positioned between the second beam and the stack;
e-1) pushing the first beam such onto the stack that the first busbars abut against the first terminals located in the area of the first busbars, and connecting the first busbars to the first terminals located in the area of the first busbars, wherein the connecting is performed using the access to the first busbars provided by the first openings;
e-2) pushing the second beam such onto the stack that the second busbars abut against the second terminals located in the area of the second busbars, and connecting the second busbars to the second terminals located in the area of the second busbars, wherein the connecting is performed using the access to the second busbars provided by the second openings.

In embodiments of the method, step a) may further include providing at least one cell spacer. In such embodiments, step b) may include arranging the cell spacers at predefined positions between the battery cells with regard to the stack direction.

Step b) may include properly aligning the battery cells and holding the battery cells in place by a suitable clamping device.

Step b) may include pre-compressing the stack of battery cells with regard to the stack direction. If the stack further includes cell spacers, step b) may include pre-compressing the assembly of stacked of battery cells and cell spacers with regard to the stack direction.

In embodiments of the method, step a) may further include providing a first busbar carrier. In such embodiments, step c) may in particular include the following sub-steps:
- fixating the first busbars to the first busbar carrier at predefined positions; and
- attaching the first busbar carrier (with the fixated busbars) to the first beam.

In embodiments of the method, step a) may further include providing a second busbar carrier. In such embodiments, step c) may in particular include the following sub-steps:
- fixating the second busbars to the second busbar carrier at predefined positions; and
- attaching the second busbar carrier (with the fixated busbars) to the second beam.

In preferred embodiments of the method, the connection of the first busbars to the first terminals in step e-1) is performed using welding, and/or the connection of the second busbars to the second terminals in step e-2) is performed using welding.

In an embodiment of the method according to the fourth aspect:
- step a) further includes providing a first end-plate and a second end-plate;
- step b) further includes arranging the first end-plate in front of the first battery cell, when viewing into the stack direction, and arranging the second end-plate behind the last battery cell, when viewing into the stack direction;
- step b) further includes pre-compressing the assembly of stacked battery cells, first and second end-plates with regard to the stack direction; and
the method further includes the following steps:
f) compressing or increasing the pre-compression of the assembly of stacked of battery cells, first and second end-plates with regard to the stack direction such that each of the first and second end-plates comes into touch with the first and the second beam;
g) fixing each of the first and second end-plate to each of the first and second beam.

In embodiments of the method, the fixing of the end-plates to the beams according to step g) is performed by means of bolts, screwing, or welding.

Accordingly, embodiments of the method according to the fourth aspect of the disclosure may include one or more of the following steps:
- The battery cells, cell spacers, end-plates and optional distance plates are arranged together and pre-compressed.
- The beams with busbar carriers are attached from the sides.
- Compression on the end-plates is further increased to enforce touch-condition between beams and end-plates.
- Beams and end-plates are joined together (e. g., by bolting, welding, ...)
- The battery cells are aligned properly (since they may be just clamped from one side up to here) and held in place with an appropriate clamping device.
- Busbars are welded from the outside through the openings in the beams on both sides.
- In particular, if not implemented into the busbar carrier, cell sensing and other sensors may be attached onto the busbars.
- Busbar covers may be applied to increase creep distances for electric components.
- The battery module may be inserted into the outer housing structure and attached to a cooling plate and/or a venting plate with adhesive and/or gapfiller (thermal interface material).
- The battery module may be joined to the housing with further connections (bolts, pins, welding, etc.) for increased structural integrity.

### Specific Embodiments

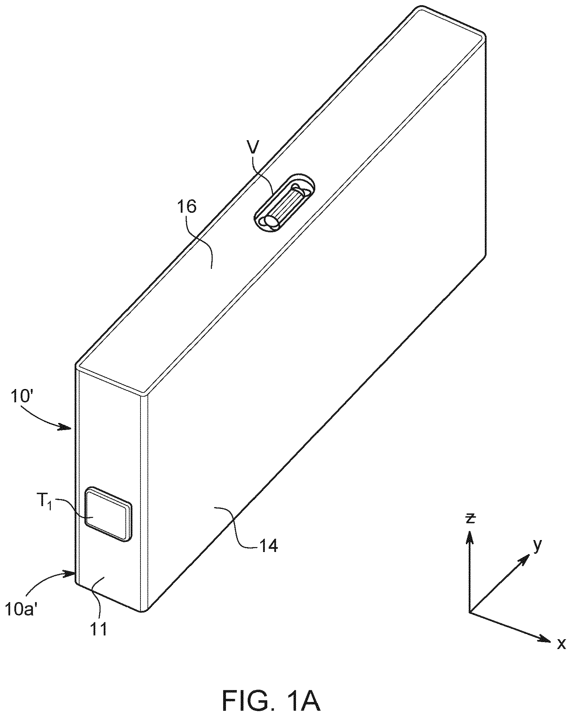

Fig. 1A illustrates a perspective view of a side-pole battery cell 10' according to an embodiment of present disclosure configured for being used, e. g., in a battery module for an electric or hybrid vehicle. A Cartesian coordinate system with axes x, y, and z is also depicted in Fig. 1A. As shown in Fig. 1A, the battery cell 10' has a parallelepiped (prismatic) shape. The case 10a' is a hardcase, which may be made, e. g., of a metal material. The case 10a' is built by a can or barrel including six planar outer side faces. The case 10a' includes a pair of congruent main sides (of that pair, only the side 14 facing into the x-direction, refers to Fig. 1A) arranged opposite to each other, each of the main sides being perpendicular to the x-axis. Also, the case 10a' includes a lower side (not visible in Fig. 1A) and an upper side 16, the lower side and the upper side 16 being congruent and arranged opposite to each other, each of the lower side and the upper side 16 being perpendicular to the z-axis. Finally, the case 10a' includes a pair of congruent lateral sides (of this pair, only the side 11 facing against the y-direction, see Fig. 1A) arranged opposite to each other.

Specifically, the pair of congruent lateral sides includes a first lateral side 11 facing against the y-direction and a second lateral side (not visible in Fig. 1A) facing into the y-direction. On the first lateral side 11 of the casing 10a', a first terminal T₁ is arranged. Similarly, on the second lateral side, and a second terminal T₂ (not visible in Fig. 1A) is arranged. Hence, throughout the present disclosure, the first lateral side 11 may also be referred to as the "first terminal side" and the opposite second lateral side may also be referred to as the "second terminal side." The terminals T₁, T₂ allow for an electrical connection of the battery cell 10'. The first terminal T₁ may be the negative terminal (negative pole) of the battery cell 10', and the second terminal T₂ may be the positive terminal (positive pole) of the battery cell 10'. Note that in this battery cell format, the main sides (14 and not visible in Fig.1A) have the largest areas compared to the remaining side faces of the case 10a', and the terminal sides (lateral sides) have the smallest areas compared to the remaining side faces of the case 10a'.

Furthermore, a venting outlet V is arranged on the upper side 16. Accordingly, the upper side 16 may in the following also be referred to as the "venting side" of battery cell 10' or its casing 10a'. Through the venting outlet V, vent gas can be ejected from the battery cell 10' in case of a thermal event occurring within the battery cell 10' such as a thermal runaway. Inside the battery cell 10', a valve (not shown in Fig. 1A) may be installed at an upstream of the venting outlet V, the valve being configured to open, if the gas pressure inside the battery cell 10' exceeds a predefined value, and to remain in a closed stated otherwise, i.e., when the gas pressure inside the battery cell 10' is below the predefined value. Thus, before being output via the venting outlet V, the vent gas may pass the venting valve arranged inside the battery cell 10'.

In some embodiments of the side-pole battery cell 10', the second terminal T₂ may have a shape identical to the mirrored shape of the first terminal T₁, the mirroring taken with respect to the x-z-plane of the coordinate system. For example, each of the first terminal T₁ and the second terminal T₂ has a flat shape extending in a region of a plane parallel to the x-z-plane. The first terminal T₁ and/or the second terminal T₂, may have, when seen along the y-direction, a rectangular shape, e. g., a square shape. In other embodiments, the second terminal T₂ may have a shape different from the shape of the first terminal T₁.

In some embodiments of the side-pole battery cell 10', the battery cell 10' has an outer appearance being symmetrical with regard to mirroring the battery cell 1 0' on a first virtual plane parallel to the x-z-plane of the coordinate system (with the first virtual plane being positioned, with regard to the y-direction, in the center between the first terminal side 11 and the second terminal side). Also, the outer appearance of the battery cell 10' may be symmetrical with regard to mirroring the battery cell 10' on a second virtual plane parallel to the y-z-plane (with the second virtual plane being positioned, with regard to the x-direction, in the center between the pair of first lateral sides), and/or may be symmetrical, except for the ventilation hole V, with regard to mirroring the battery cell 10' on a third virtual plane parallel to the x-y-plane m (with the third virtual plane being positioned, with regard to the z-direction, in the center between the pair of second lateral sides).

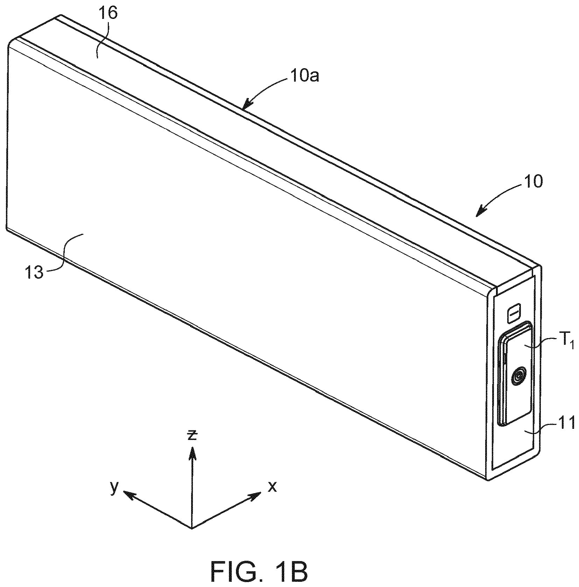

Fig. 1B illustrates a perspective view of a side-pole battery cell 10 according to other embodiment of the present disclosure configured for being used, e. g., in a battery module for an electric or hybrid vehicle. The structure of the battery cell 10 is similar to that of the battery cell 10' of Fig. 1A. It includes a case 10a, which is a hardcase being made, e. g., of a metal material. However, in comparison to the battery cell 10' of Fig. 1A, the battery cell 10 of Fig. 1B has a more elongated shape, i. e., the ratio of the extension along the y-axis to the extension along the z-axis is larger. Further, the venting outlet is arranged on the lower side (not shown) of the battery cell 10 and is thus not visible in Fig. 1B.

Both of the battery cell 10' of Fig. 1A and the battery cell 10 of Fig. 1B are embodiments of side-pole battery cells that may be used in the present disclosure. And the embodiments will be described in the following.

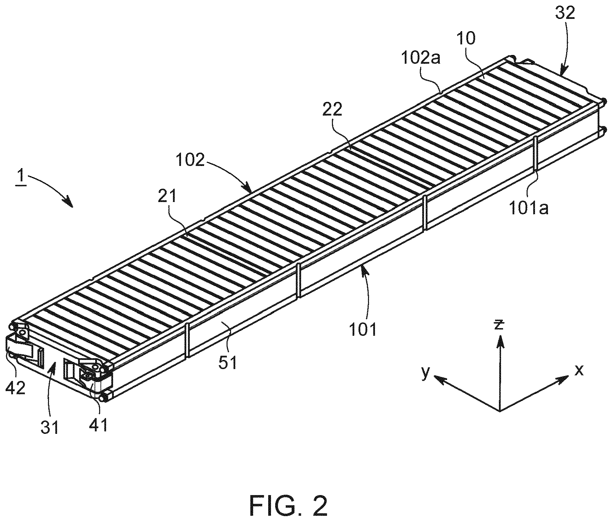

Fig. 2 schematically illustrates perspective view of a battery module 1 according to an embodiment of the present disclosure. A Cartesian coordinate system with axes x, y, and z is added to facilitate the following description. In the shown embodiment, the battery module 1 is a large-format module for longitudinal configuration in an electric vehicle (EV) in its fully assembled state. Specifically, the battery module 1 includes a stack of 45 side-pole battery cells 10 each having a parallelepiped shape. For example, the battery cells 10 may each correspond to the battery cell 10 of Fig. 1B. With regard to the coordinate system, the battery cells 10 are stacked along the x-direction, which thus in the following will be also referred to as the "stack direction." and the stacked cells may further include cell spacers 21, 22 (also called "distance plates") inserted between some pairs of subsequent battery cells 10. Cell spacers 21, 22 may be inserted behind every battery cell 10 to improve thermal and structural behavior. In the present case, the cell spacers are inserted into the stack after every 15 battery cells 10.

In the stack, the side-pole battery cells 10 are each orientated such that their respective main sides (not visible in Fig. 2) are arranged orthogonal to the x-direction, i. e., perpendicular to the stack direction. Further, their respective terminal sides (not visible in Fig. 2) are arranged perpendicular to the y-direction such that the first terminal side faces into the y-direction and the second terminal side faces against the y-direction. Also, the battery cells 10 are electrically connected to each other by a plurality of busbars (not visible in Fig. 2) attached to their terminals. This will be explained in more detail below.

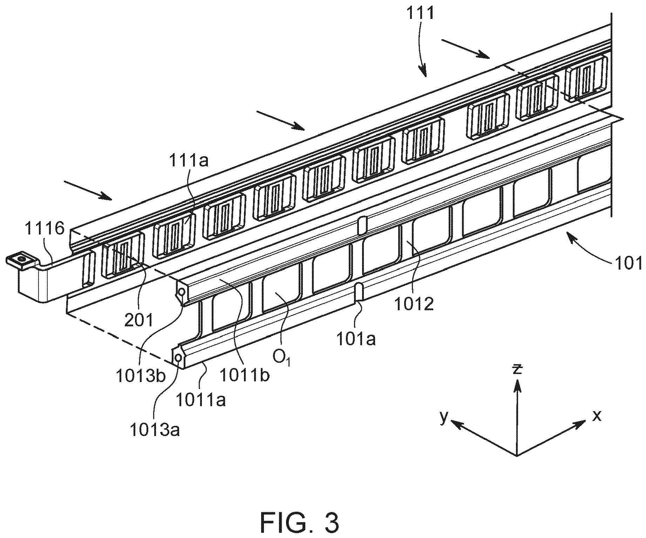

The battery module 1 further includes a first beam 101 and a second beam 102. Each of the beams 101, 102 has a longitudinal shape oriented along the x-direction and is attached to the stack. Specifically, the first beam 101 extends along the first terminal sides of each of the battery cells 10, and the second beam 102 extends along the second terminal sides of each of the battery cells 10. The first beam 101 and the second beam 12 are each configured to make the battery module 1 structurally rigid. For example, the beams 101, 102 may be made of a metal material. To make the procedure of connecting the busbars to the terminals of the battery cells easy, each of the beams 101, 102 may include a plurality of openings O₁, O₂ (see Fig. 3). This will be explained in more detail below with reference to Fig. 3.

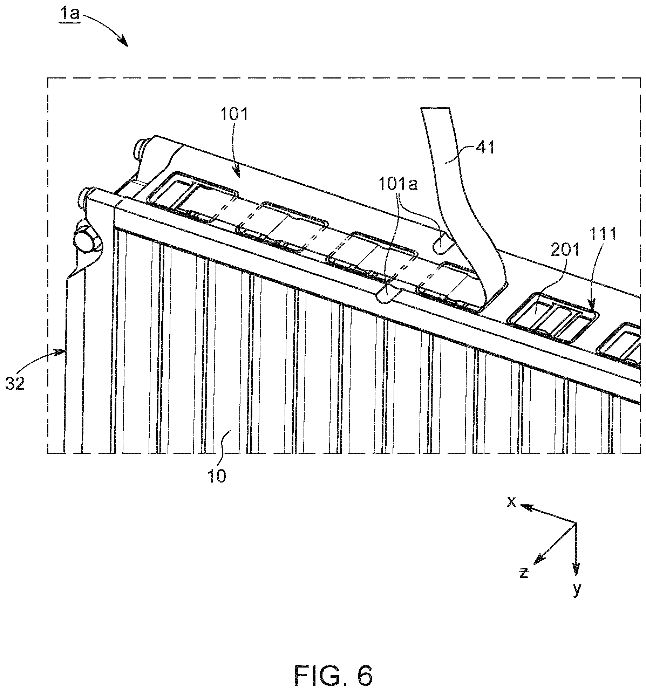

Moreover, the first beam 101 includes a plurality of first recesses 101a to facilitate a fixation (e. g., clamping) of the battery module 1 within a battery pack. For example, each of the recesses 101a is formed as a semi-circular indentation provided in the first beam 101 (see also Figs. 3 and 6). For the same reason, the second beam 102 includes a plurality of similar second recesses 102a.

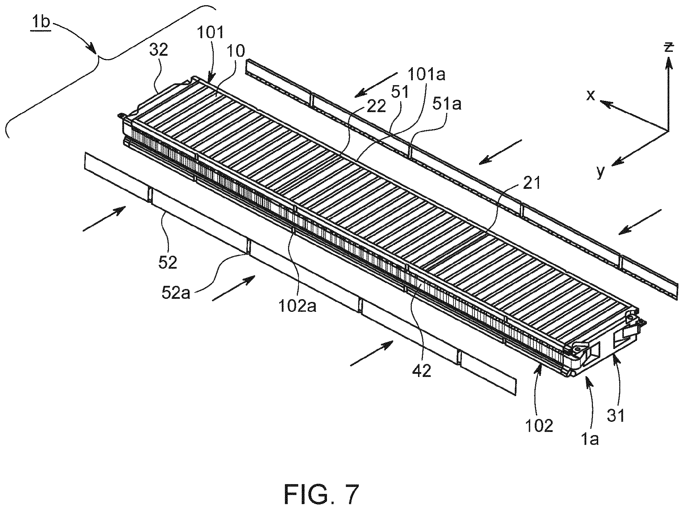

However, a first busbar carrier 111 (not visible in Fig. 2; see Fig. 3) is arranged between the first terminal sides of the battery cells 10 and the first beam 101. Similarly, a second busbar carrier (not visible in Fig. 2) is arranged between the second terminal sides of the battery cells 10 and the second beam 102. The first and second busbar carriers 111, 112 likewise each has a longitudinal shape orientated along the x-direction. As will be explained in more detail below with reference to Fig. 3, the busbar carriers 111, 112 are configured for carrying the busbars. On the busbars, one or more sensing means (e.g., sensors) are arranged. The sensing means are integrated or attached to tapes 41, 42 (see Fig. 6) that can be easily implemented into the battery module 1. Other electric and/or electronic components may also be embedded into these tapes 41, 42. Moreover, busbar covers 51, 52 (see Fig. 7) can be attached to the beams 101, 102 to protect the busbars and to increase the creep distance of the electronic components integrated or attached to the tapes 41, 42. This will be explained in more detail below with reference to Fig. 7.

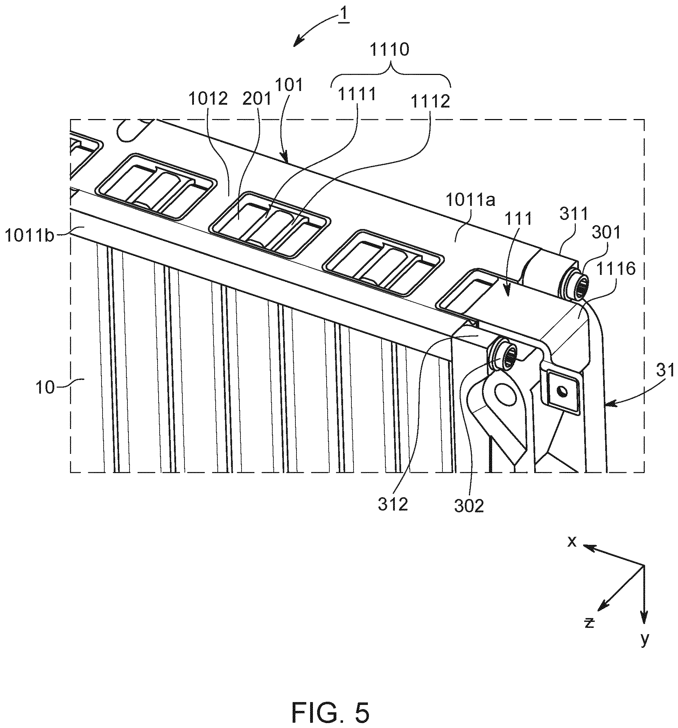

Moreover, multifunctional end-plates 31, 32 (see Fig. 5) are joined to the ends of the beams 101, 102. Specifically, a first end-plate 31 is joined to ends of the first and second beams 101, 102 pointing against the x-direction, and a second end-plate 32 is joined to opposing ends of the first and second beams 101, 102 pointing into the x-direction. the joining may be realized by bolting, screwing, welding, or similar fastening techniques. This will be described in more detail below with reference to Fig. 5.

Fig. 3 schematically illustrates an explosion view of an assembly of a first beam and a first busbar carrier. carrier 111 employed in the embodiment of the battery module 1 already mentioned above with reference to Fig. 2. As shown in Fig. 3, the first beam 101 includes a pair of shoulders, viz. a lower shoulder 1011a and an upper shoulder 1011b, each of which extending parallel to the x-axis of the coordinate system. The lower shoulder 1011a and the upper shoulder 1011b are connected to each other by a plurality of struts 1012 periodically arranged along the x-direction, end each of which extending along the z-direction. Due to this arrangement, an opening O₁ is formed between any two struts being neighbored with regard to the x-direction, and confined, with regard to the z-direction, by the lower shoulder 1011a and the upper shoulder 1011b. Accordingly, the first beam 101 includes a plurality of first openings O₁ providing access to a plurality of first busbars 201 (only one of them marked by a reference sign for the sake of simplicity of the drawing) held in position behind the first beam 101 (when viewing into the y-direction) by means of the first busbar carrier 111.

As already pointed out above with reference to Fig. 2, the first busbar carrier 111 is configured to be placed between the first terminal sides of the battery cells 10 of the battery module 1 and the first beam 101. Hence, in the assembled state of the battery module 1, the first busbar carrier 111 abuts against the first beam 101, which is indicated in Fig. 3 by the arrows pointing against the y-direction. During manufacture, the structure of the busbar carrier 111 with the busbars 201 placed therein is pre-assembled, before the assembly of the battery module 1 will be started. The first busbar carrier 111 includes a plurality of cut-outs 111a located at those positions, which are intended to be placed on the first terminals of the battery cells 10, when the battery module 1 is assembled (see Fig. 2). Hence, during manufacture, when the first busbar carrier 111 and the first beam 101 are arranged or aligned accordingly besides the first terminal sides of the battery cells 10 (as shown in Fig. 2), the busbars 201 can be (at least partly) accessed from outside through the first openings O₁ of the first beam 101 and one or more cut-outs 111a located behind the first openings O₁ (when viewing into the y-direction), thus allowing for a joining of the first busbars 201 to respective first terminals arranged behind the first busbars 201 (when again viewing into the y-direction; the first terminals not being visible in Figs. 2 and 3).

Accordingly, due to the afore-described access to the busbars 201 provided by the first openings O₁ of the first beam 101 and the cut-outs 111a in the first busbar carrier 111, the first busbars 201 can be joined (e. g., welded) to respective first terminals arranged behind the first busbars 201 (when again viewing into the y-direction) by tools (e. g., a welding torch / blowpipe; not shown) reaching to the required portions of the busbars 201 through the first openings O₁ of the first beam 101 and the cut-outs 111a in the first busbar carrier 111.

The first busbars 201 may be attached to the first busbar carrier 111, e. g., by over-molding, clipping, or gluing. Further, the first busbar carrier 111 may be fixated to the first beam 101, e. g., by clipping or gluing.

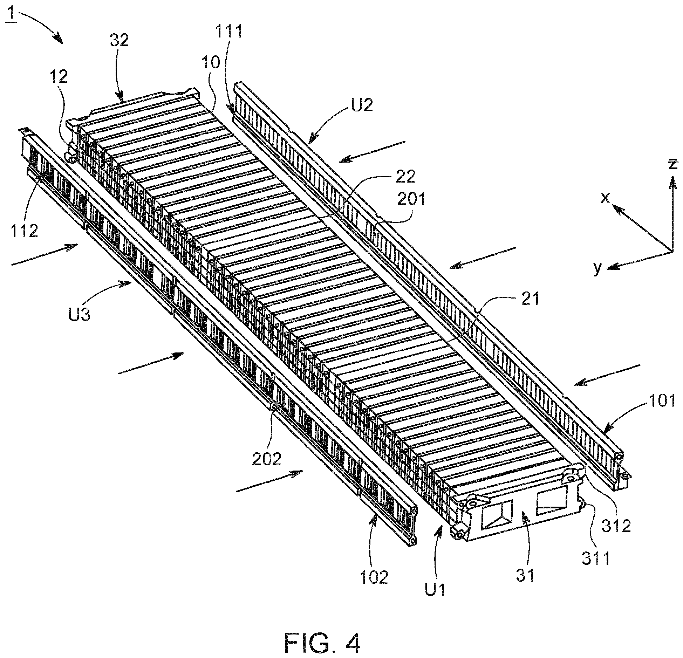

The arrangement and assembly of the second beam 102 (see Fig. 4), the second busbar carrier 112, and a plurality of second busbars 202 is similar as described before with regard to the first beam 101, the first busbar carrier 111, and the plurality of first busbars 201, with the only difference that the shape and arrangement of all members is mirrored with regard to virtual plane parallel to the x-z-plane of the coordinate system.

To provide an electrical isolation of the busbars 201, 202 from the beams 101, 102 (which are made of a metal material and thus electrically conductive; see above), the busbar carriers 111, 112 are each built from an isolating material such as plastics.

Fig.4 schematically illustrates a partial explosion view of the battery module 1 of Fig. 2 (the busbar covers 51, 52 being omitted). The view may be also interpreted as one state of the assembly during manufacture of the battery module 1. Specifically, in this state, the battery module one includes three pre-assembled units U1, U2, U3. A first pre-assembled unit U1 is the stack including a plurality of battery cells 10 and cells spacers 21, 22 arranged in a row along the x-direction, the stack being confined (with regard to the x-direction) by a pair of the first and second end-plates 31, 32, as already described above with reference to Fig. 2. A second pre-assembled unit U2 includes the first beam 101 being already attached to the first busbar carrier 111 carrying the plurality of first busbars 201. Eventually, a third pre-assembled unit U3 includes the second beam 102 being already attached to the second busbar carrier 112 carrying the plurality of second busbars 202.

With the afore-described three pre-assembled units U1, U2, U3 being present, the further assembly of the battery module 1 as shown in Fig. 1 is rather simple: The first pre-assembled unit U1 becomes pushed to the first terminal sides of the battery cells 10 (as indicated by the arrows pointing into the y-direction) such that the side of the first unit U1 facing into the y-direction abuts against the first terminal sides of all of the battery cells 10. Similarly, the second pre-assembled unit U2 becomes pushed to the second terminal sides 12 of the battery cells 10 (as indicated by the arrows pointing against the y-direction) such that the side of the first unit U2 facing against the y-direction abuts against the second terminal sides 12 of all of the battery cells 10. Then, by a suitable connecting tool (such as a welding torch / blowpipe; not shown) guided through the first openings O₁ of the first beam 111 and the cut-outs 111a of the first busbar carrier 111 to predefined parts of the first busbars 201, the predefined parts of the first busbars 201 become fixated to first terminals of the battery cells 10. Similarly, by the suitable connecting tool guided through the second openings O₂ of the second beam 102 and the cut-outs 112a of the second busbar carrier 112 to predefined parts of the first busbars 202, the predefined parts of the second busbars 202 become fixated to second terminals of the battery cells 10. Finally, the first end-plates 31 becomes fixated (e. g., using screws; see Fig. 5) to the end of the first beam 101 pointing against the x-direction as well as to the end of the second beam 102 pointing against the x-direction, and similarly, the second end-plates 32 becomes fixated (e. g., using screws; see Figs. 5 and 6) to the end of the first beam 101 pointing into the x-direction as well as to the end of the second beam 102 pointing into the x-direction. During the afore-described process of assembling the three units U1, U2, and U3, the individual battery cells 10 may be held in place by clamps (in particular to avoid slipping of the battery cells 10 along the z-direction), and/or the first unit U1 (i. e., the stack of battery cells 10 and cells spacers 21, 22 together with the first and second end-plates 31, 32) may be compressed with regard to the x-direction.

Fig. 5 schematically illustrates a partial perspective view of the battery module 1 of Fig. 2 (without the tape 41 and the busbar cover 51), thereby providing a detailed view of the connection between the first end-plate 31 and the first beam 101. The spatial arrangement of the stacked battery cells 10, the first end-plates 31, the first beam 101, the first busbar carrier 111, and the first busbars 201 with respect to each other has already been discussed above with reference to Figs. 2 to 4. As shown in Fig. 5, the first end-plates 31 can be fixated to the first beam 101 using first and second bolts (or screws) 301, 302. Specifically, the first bolt (or screw) 301 is inserted through a through-hole provided in a first protrusion 311 of the first end-plate 31 into a first bore-hole 1013a provided in the respective end of the lower shoulder 1011a of the first beam 101 (see also Fig. 3). Correspondingly, the second bolt (or screw) 302 is inserted through a through-hole provided in a second protrusion 312 of the first end-plate 31 into a second bore-hole 1013b provided in the respective end of the upper shoulder 1011b of the first beam 101 (see also Fig. 3).

It is understood that similar fixations may also be realized in a corresponding manner between the first end-plate 31 and the second beam 102, as well as between the second end-plate 32 and the first beam 101 (see Fig. 6), as well as between the second end-plate 32 and the second beam 102.

The afore-described fixations between the end-plates 31, 32 and the beams 101, 102 provide a sufficiently robust mechanical connection such that swelling forces caused by swelling battery cells 10 and acting against the x-direction onto the first end-plate 31 and into the x-direction onto the second end-plate 32 can be absorbed by the end-plates 31, 32 and redirected to the beams 101, 102 through the connections described above. Also, due to the rigidity of the first and second beams 101, 102, the swelling forces are absorbed by the first and second beams 101, 102.

Moreover, Fig. 5 illustrates a possible fixation, by which each of the first busbars 201 is carried (i. e., held in a predefined position) by the first busbar carrier 111. Specifically, for each busbar 201, a plurality of struts extending along the z-direction may be provided by the first busbar carrier 111, wherein the struts are configured such that the respective busbar 201 can be clamped between these struts. As shown in Fig. 5 the plurality of struts is a pair of the first strut 1111 and the second strut 1112. Between the first strut 1111 and the second strut 1112, a third strut (not visible in Fig. 5, since covered by one of the busbars 201) is provided. Then, the busbar 201 can be clamped between the first strut 1111 and the second strut 1112 on the one side of the busbar 201 and the third strut (not visible) on the other side of the bus bar 201. It is understood that a similar clamping mechanism maybe also employed to attach the second busbars 202 to the second busbar carrier 112.

The first busbar carrier 111 may be prolonged against the x-direction by a snatch 1116, into which the first end-plate 31 can be clamped. This may in particular be useful to hold the first end-plate 31 in place during manufacture, before the end-plate 31 is fixated to the beams 101, 102, e. g., using bolts and/or screws as described above. It is understood that the first busbar carrier 111 may also prolonged similarly into the x-direction to hold the second end-plate 32 in place, and that the second busbar carrier 112 may be equipped correspondingly.

Fig. 6 schematically illustrates a partial perspective view of the battery module 1 of Fig. 2 (without the busbar cover 51), specifically showing the area of the corner, where the second end-plate 32 is attached to the first beam 101. As already described with Fig. 2, the battery module 1 includes one or more battery cell sensors (e. g., temperature sensors) and other sensors (e. g., voltage sensors, current sensors) being attached on the first busbars 201. In the shown example, the sensors are integrated in or attached to a first tape 41 fixable onto the busbars 201 in a predefined position. In the drawing, the tape 41 is shown in a state being only partially fixed to the first beam 101. For example, the first tape 41 may be formed as an adhesive tape that may be glued onto the outer side (i. e., the side facing away from the stack) of the first beam 101. Then, through the openings O₁ of the first beam 101 as well as the cut-outs 111a of the first busbar carrier 111, the first tape 41 also comes in contacts of parts of the busbars 201. Hence, if the sensors are provided at respective positions, the sensors integrated in or attached to the first tape 41 can be connected (e. g., electrically and/or thermally) to the busbars 201 at predefined positions. The first tape 41 may also include signal lines for transmitting the signals generated by the sensors to a controller such as a module management controller (MMC). The first tape 41 may also include further electric or electronic components, if required, e. g., control units. It is understood that a corresponding second tape 42 (not shown in Fig. 6) may also be provided, which is configured to be attached on the outer side of the second beam 102, having further sensors to be connected to the second busbars 202 (see Fig. 7).

Fig. 7 schematically illustrates explosion view of the battery module 1 of Fig. 2. As shown in Fig. 7, the busbar covers 51, 52 are shown in a state detached from the body of the battery module 1. As already described above, the battery module 1 includes a first tape 41 with sensors being connected to the first busbars 201 (not visible in Fig. 7) and, correspondingly, a second tape 42 with sensors being connected to the second busbars 202. To increase the creep distances for these sensors (and, in embodiments, further electric and/or electronic components integrated in or attached on the first and second tapes 41, 42) and to protect these sensors and components from external mechanical loads, busbar covers 51, 52 can be attached to the beams 101, 102. The busbar covers 51, 52 also protect the busbars 201, 202 from external mechanical, electrical, or thermal impacts, which otherwise may influence the busbars 201, 202 through the tapes 41, 41 via the openings O₁, O₂ in the beams 101, 102 and the cut-outs in the busbar carriers 111, 112.

Specifically, a first busbar cover 51 may have a ]-shaped cross-sectional profile (with regard to a cut parallel to the y-z-plane of the coordinate system and when viewing into the x-direction) and is attached to that side of the first beam 101, which faces away from the stack of battery cells 10 and cells spacers 21, 22. This is shown in Fig. 7 by the arrows besides the first busbar cover 51 pointing into the y-direction. Also, a second busbar cover 52 may have a [-shape cross-sectional profile (with regard to a cut parallel to the y-z-plane and when viewing into the x-direction) add is attached to that side of the second beam 102, which faces away from the stack of battery cells 10 and cells spacers 21, 22. This is shown in Fig. 7 by the arrows besides the second busbar cover 52 pointing against the y-direction.

At positions, which are configured to be located on the first recesses 101a of the first beam 101, the first busbar cover 51 includes slots or spaces 51a, which provide access to the recesses 101a, when the busbar cover 51 is attached to the first beam 101. This way, brackets or bolts 400 (see Fig. 6) can be brought in engagement with the recesses 101a, even when the first beam is covered by the first busbar cover 51. For a similar reason, the second busbar cover 52 includes corresponding slots or spaces 51b at positions, which are configured to be located on the second recesses 102a of the second beam 102.

Of course, in alternative embodiments, the first and second tapes 41, 42 with the sensors and, possibly, other electric and/or electronic components may be omitted. In such embodiments, the first busbar cover 51 only protects the first busbars 201 from outer influences / impacts, and the second busbar cover 52 only protects the second busbars 202 from outer influences / impacts. Also, in embodiments, only one of the first busbar cover 51 and the second busbar cover 52 may be used. This applies to both, embodiments with the first tape 41 and/or the second tape 42 as well as to embodiments without the tapes 41, 42.

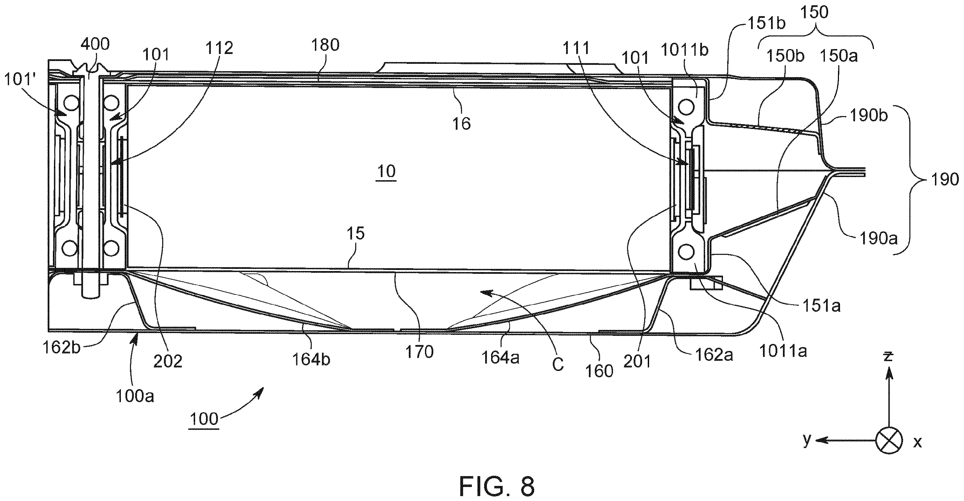

Fig. 8 schematically illustrates schematic cross-section view of a battery pack 100 according to other embodiment of the present disclosure. In the shown example, the battery pack 100 includes a housing 100a accommodating a plurality of battery modules 1 as described before with reference to Figs. 2 to 7 arranged in a row along the y-direction. As only a portion of the battery pack 100 is illustrated in Fig. 8, solely the rightmost battery module (with regard to the view provided by Fig. 8) is completely shown, which includes a battery cell 10, a first beam 101, and a second beam 102 (see above). Also, the first beam 101' of a neighbored further battery module is visible.

The plurality of battery modules is accommodated in the housing 100a of the battery pack 100. The housing 100a includes a bottom plate 160, a venting plate 170, and a cooling plate 180, each of which extending parallel to the x-y-plane of the coordinate system also provided in the drawing to facilitate the following description. The venting plate 170 is arranged in a certain distance above the bottom plate 160. The venting plate 170 is supported by a plurality of support braces 162a, 162b resting on the bottom plate 160. Specifically, beneath each of the battery modules accommodated in the housing 100, a pair of support braces is mounted, viz. a first support brace 162a and a second support brace 162b. According to this arrangement, beneath any one of the battery modules, a channel C extending along the x-direction is formed, the channel C being confined, with respect to the y-direction, by the first and second support braces 162a, 162b and, with respect to the z-direction, by the bottom plate 160 and the venting plate 170. The housing 100 further includes a pair of lateral plates confining the housing 100 with regard to the y-direction. In Fig. 8, only a right lateral plate 190 is shown, which includes a lower portion 190a and an upper portion 190b.

Each of the battery modules is placed on top of the venting plate 170. Hence, each of the battery module's battery cells 10 abuts with its lower side 15 against the venting plate 170. The venting plate 170 may include a plurality of cut-outs (not shown) located (with respect to the x- and y-direction) at the positions of venting outlets provided in the lower side of the battery cells 10 (see description as to Figs. 1A and 1B). With respect to the z-direction, these cut-outs are located beneath the venting outlets of the battery cells 10. Hence, vent gas and/or other materials exhaled or ejected from the venting outlets in case of a thermal event would enter the channel C through the afore-mentioned cut-outs in the venting plate 170. Moreover, the venting plate 170 provides mechanical support to the battery modules (and its components such as the individual battery cells 10, cell spacers, etc.) arranged thereon, in particular with regard to the z-direction. Cross-braces 164a, 164b may also be provided in the interstice between the bottom plate 160 and the venting plate 172 to further increase the housing's mechanical stability against shear forces acting parallel to the y-z-plane of the coordinate system on the housing 100a. In the cross-sectional cut illustrated in Fig. 8, the cross-braces 164a, 164b are each arranged in a diagonal direction (with regard to the y-axes and the z-axes of the coordinate system) between the bottom plate 160 and the venting plate 170 within the area of the channel C.

On top of the plurality of battery modules, the cooling plate 180 is arranged such that the upper sides 16 of any one of the battery cells 10 is in thermal contact with the cooling plate 180. In the exemplary embodiment shown in Fig. 8, this is realized in that the upper sides 16 of the battery cells 10 each abut from beneath against the lower surface of the cooling plate 180. The cooling plate 180 may be thermally connected to a cooling system (not shown), which is configured for actively cooling the cooling plate 180 during operation of the battery pack 100. Moreover, the cooling plate 180 provides mechanical support to the battery modules (and its components such as the individual battery cells 10, cell spacers, etc.) arranged beneath, in particular with regard to the z-direction.

The individual battery modules may further be held in place by one or more brackets 400, which may engage with respective recesses 101a, 102a (see Figs. 2, 3, and 6) provided in the first and second beam 101, 102 of each battery module. Each of the brackets 400 may be configured to be placed in between two neighbored battery modules (with regard to the y-direction), as shown in Fig. 8. In this case, the brackets 400 may each exhibits a symmetric shape such that they allow placement and/or clamping of each of the two neighbored battery modules. Specifically, as illustrated in Fig. 8, both, the second beam 102 of the rightmost battery module as well as the first beam 101' of the further battery module arranged next to the rights most battery module to the left, are held at the same time by one of the brackets 400. In embodiments, the brackets 400 may be formed as bolts configured to be (at least partially) inserted into the semi-circular recesses 101a, 102a provided in the first and second beams 101, 102 and described above with reference to Figs. 2, 3, and 6.

As can be further taken from Fig. 8, the rightmost battery module is held in place, with regard to the y-direction, at its right side directly by the housing 100a of the battery pack 100. In particular, the rightmost battery module abuts, with its first beam 101, against the vertical portions 151a, 151b of supporting struts 150a, 150b resting on the battery pack's right lateral side 190. Specifically, the lower shoulder 1011a of the first beam 101 (see also the above description as to Fig. 3) is supported by a lower portion 151a of the lower supporting strut 150a resting on the lower portion 190a of the battery pack's right lateral plate 190. Correspondingly, the upper shoulder 1011b of the first beam 101 (see also the above description as to Fig. 3) is supported by an upper portion 151b of the upper supporting strut 150b resting on the upper portion 190a of the battery pack's right lateral plate 190. Hence, loads applied from the outside to the right lateral plate 190 would be transferred, by the lower and upper supporting struts 150a, 150b directly to the shoulders 1011a, 1011b of the first beam 101, which, in turn, transfers the load to the cases 10a of the individual battery cells 10 included in the rightmost battery module. From there, the load may be further transferred similarly by the subsequently arranged battery modules into the y-direction. It is understood that a similar structure may also be present on the opposite side of the battery pack 100, e. g., between a leftmost a lateral plate (not shown) of the battery pack and the leftmost battery module arranged in the battery pack.

Thus, provided that the cases 10a of the individual battery cells 10 each exhibit a sufficiently large stability, the battery modules themselves contribute to the stiffness-and thus to the mechanical stability-of the housing of the battery pack. For this reason, the cases 10a of the individual battery cells 10 are each formed as a hardcase being made by a suitable material such as metal or a metal alloy.

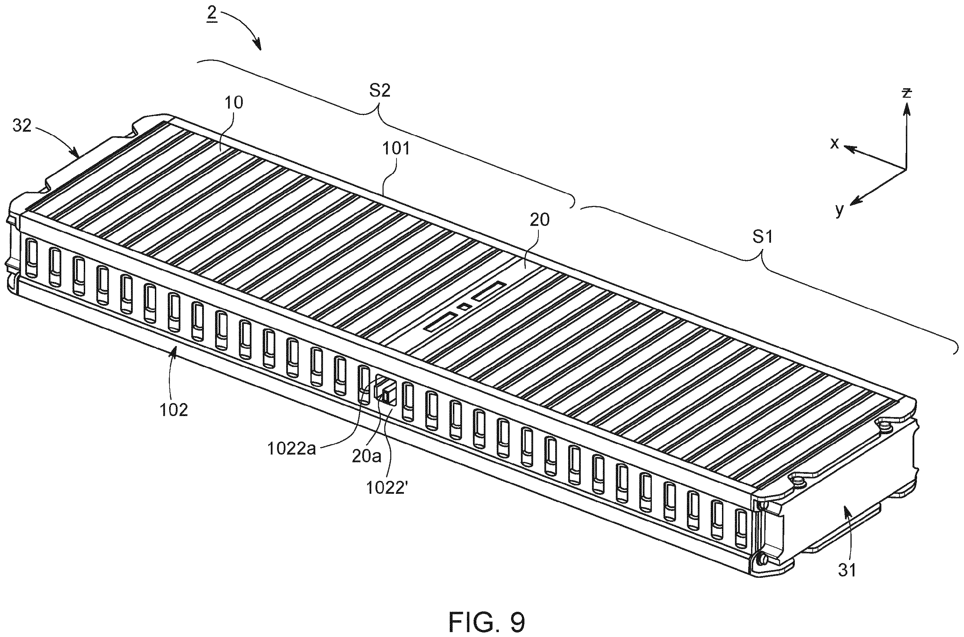

The battery module 1 illustrated in Fig. 2 is in particular able to transfer compressive loadings transverse to cell stacking direction (y-direction in Fig. 2) by transferring them through the cases (barrels) 10a of the individual battery cells 10; therefore, loadings should be introduced in the upper and lower shoulder of the beams (see Fig. 8). The battery module 1 is further able to be clamped in z-direction near the beams with bolting joints or similar (see semicircular recesses in Figs. 6 and 8). Also, the module 1 is capable to absorb shear forces acting parallel to the x-z-plane and/or the y-z-plane, which occur in the battery pack's bending loadcases. However, these properties are also provided by a further embodiment of a battery module according to the disclosure, which will be described in the following with reference to Figs. 9 to 13.

Fig. 9 schematically illustrates a perspective view of a battery module according to other embodiment of the present disclosure.. Similar to the battery module 1 described before with reference to Figs. 2 to 7, the battery module 2 depicted in Fig. 9 includes a stack of battery cells 10 arranged along the x-direction, wherein at certain positions between two neighbored battery cells, a cell spacer 20 is inserted. The stack is confined, at its ends, by a first end-plate 31 and a second end-plate 32, similar to the embodiment described before with reference to Fig. 2. In the shown example of Fig. 9, the cell spacer 20 is inserted in a center position of the stack (with respect to the x-direction), thus dividing the stack of battery cells in two equally sized sub-stacks, a first sub-stack including the battery cells arranged between the first end-plate 31 and the cell spacer 20, and a second sub-stack containing the battery cells between the cell spacer 20 and the second end-plate 31.

However, unlike to the embodiments described before with reference to Figs. 2 to 7, the battery cells 10 are not electrically interconnected to each other so as to form a single circuit, e. g., a series connection of the battery cells 10 or a parallel connection of the battery cells 10 included in the stack. Instead, the battery cells of the first sub-stack are interconnected to each other to form a first circuit (not shown), and the battery cells of the second sub-stack are interconnected to each other to form a second circuit (not shown), the first circuit and the second circuit being not (at least not directly) electrically connected to each other. In other words, the battery cells of the first sub-stack form a first sub-module S1, and the battery cells of the second sub-stack form a second sub-module S2.

However, in spite of being electrically separated, the first sub-module S1 and the second sub-module S2 share common structural elements. Specifically, a first beam 101 and a second beam 102 are arranged at the lateral sides (i. e., the sides facing into and against the y-direction) of the complete stack, thus providing lateral support to both, the battery cells of the first sub-stack / first sub-module S1 and the battery cells of the second sub-stack / second sub-module S2, as well as to the cell spacer 20. Moreover, a first busbar carrier and a second busbar carrier are each shared by either sub-stack / sub-module S1, S2.

In the embodiment of Fig. 9, the cell spacer 20 includes a module management controller (MMC; not shown, since integrated in the cell spacer 20). The MMC is configured for receiving the signals generated by the sensors / sensing means arranged in the battery module 2. The MMC may be further configured for evaluating these signals and to control processes having an influence on the battery module 2, e. g., thermal control such as cooling or limiting the electric load etc. The MMC may be connected to the BMS or BMU of a battery pack or a battery system including the battery module of Fig. 9.

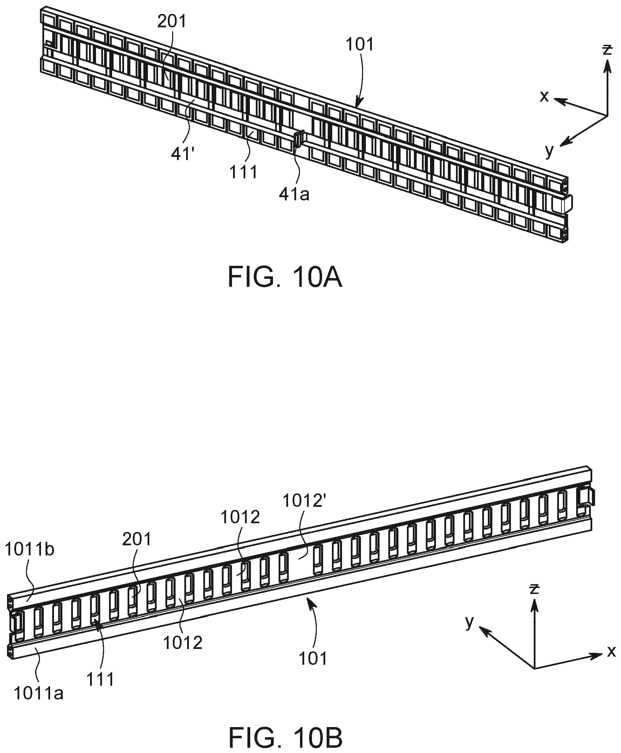

Fig. 10A schematically illustrates a perspective view of a first beam 101 of the battery module 2 of Fig. 9, into which the first busbar carrier 111 is implemented. Here, the first busbar carrier 111 carries a plurality of busbars 201 similar to the busbar carrier described above in the context of Fig. 3. Visible in Fig. 10A is the side of the busbar carrier 111 configured to be attached to the battery cell stack. As can be seen in Fig. 10A, the cell sensing devices (integrated in a band 41') are implemented into the busbar carrier 111 in the shown example, unlike to the embodiment depicted in Fig. 6. The band 41' may also include other electric or electronical components such as signal lines etc. At a centered position with regard to the x-direction, a band connector 41a is installed on the band 41', which is configured for establishing a connection of the signal lines to the module management controller 20 (MMC), when the battery module 2 of Fig. 9 is assembled. It is understood that the second beam 102 together with the second carrier 112 (as well as the second busbars 202 and, possibly, further cell sensing devices) may have a similar structure (see Fig. 9).

Fig 10B schematically illustrates other perspective view of the first beam 101 of the battery module 2 of Fig. 9, wherein the busbar carrier 111 is attached (from behind with respect to the view of Fig. 10B) to the first beam 101. Here, the first beam 101 has a structure essentially similar to the structure of the beam depicted in Fig. 3, i. e., it includes a lower shoulder 1011a and an upper shoulder 1011b, each of the shoulders 1011a, 1011b extending along the x-direction and connected to each other by a plurality of struts 1012 arranged in between the shoulders 1011a, 1011b, thereby leaving openings in the first beam, through which the first busbars 201 are accessible. At a centered position with regard to the x-direction, i. e., at the position vis-à-vis to the cell space 20 (including the MMC) in the assembled battery module 2 of Fig. 2, a strut 1012' is formed, which is thicker (with regard to the x-direction) in comparison to the remaining struts 1012 so as to cover the MMC 20 at its lateral side facing to the first beam. It is understood that the second beam 102 together with the second carrier 112 (as well as the second busbars 202 and, possibly, further cell sensing devices) may have a similar structure, with the exception, however, that the centered thicker strut 1022' includes a cut-out 1022a allowing one or more connectors 20a (that may be collected in a plug) such as one or more high-voltage (HV) connectors to be passed through the cut-out 1022a (see Fig. 9).

Fig .11 illustrates an enlarged view of the first beam 101 of Fig. 10A, showing the area around the band connector 41a. As can be seen from the drawing, a protrusion 41b arises from the first busbar carrier 111. On the protrusion 41b, the band connector 41a is positioned, which is formed as a plug. The band 41' includes a first sub-band 411' and a second sub-band 412' electrically isolated from each other. The first sub-band 411' abuts against the busbars 201 configured to be connected to the battery cells of the first sub-module S1 (see Fig. 9). Correspondingly, the second sub-band 412' abuts against the busbars 201 configured to be connected to the battery cells of the second sub-module S2 (see Fig. 9). Hence, by connecting the band connector 41a to the MMC, the MMC is enabled to receive signals from sensors (integrated in or arranged on the band 41') measuring states of the battery cells of the first sub-module S1 as well as states of the battery cells of the second sub-module S2.

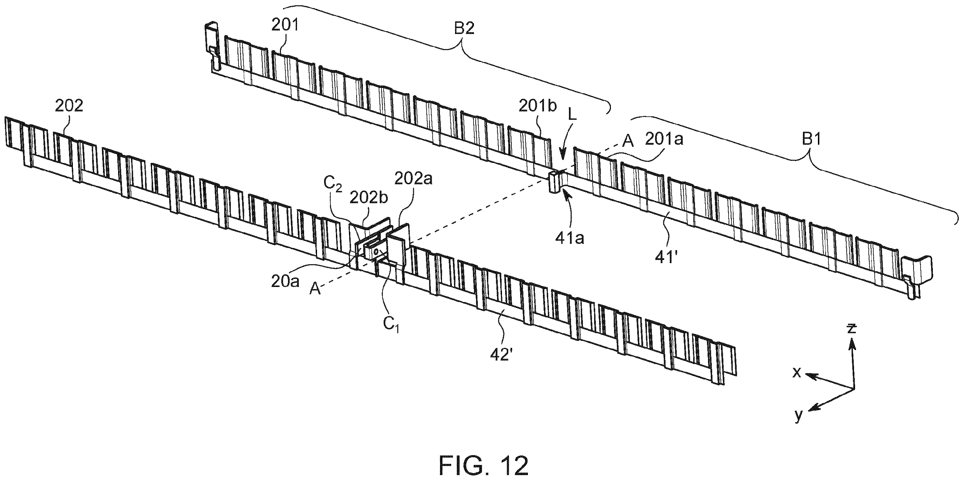

Fig. 12 schematically illustrates a perspective view of a skeleton built by a plurality of busbars 201,202 and other components 41',42' connected to busbars The skeleton built by the plurality of first busbars 201, the plurality of second busbars 202, the first band 41', a corresponding second band 42' connected to the second busbars 202, the band connector 41a and the connector 20a. Here, the connector 20 is configured as a high-voltage (HV) connector. As can be taken from Fig. 12, the individual first busbars 201 (aligned subsequently parallel to the x-axis of the coordinate system) are separated from each other by interstices. Correspondingly, the individual second busbars 202 (aligned subsequently parallel to the x-axis of the coordinate system) are also separated from each other by interstices. Further, the plurality of first busbars 201 is arranged opposite, with respect to the y-direction, to the plurality of second busbars 202. However, with respect to the x-direction, the plurality of second busbars 202 is shifted by a certain distance relative to the plurality of first busbars 201 such that each of the individual of busbars 201 is arranged opposite, with respect to the y-direction, to an interstice between a pair of second busbars 202. However, in the center of the depicted arrangement with regard to the x-direction (indicated by the dashed line A - A), the interstices between the neighbored first busbars as well as between the neighbors second busbars are enlarged. Hence, when inserting battery cells 10 between the plurality of first busbars 201 and the plurality of second busbars 202 (thereby each of the battery cells 10 being orientated such as shown in Fig. 9), the arrangement of the first and second busbars 201, 202 provides a series connection of the battery cells 10 arranged in the first region B1 with respect to the x-direction (i. e., of the first sub-stack of battery cells 10 as explained with reference to Fig. 9), thereby forming the first sub-module S1 of the battery module 2 illustrated in Fig. 9. At the same time, the arrangement of the first and second busbars 201, 202 provides a series connection of the battery cells 10 arranged in the second region B2 with respect to the x-direction (i. e., of the second sub-stack of battery cells 10 as explained with reference to Fig. 9), thereby forming the second sub-module S2 of the battery module 2 illustrated in Fig. 9.

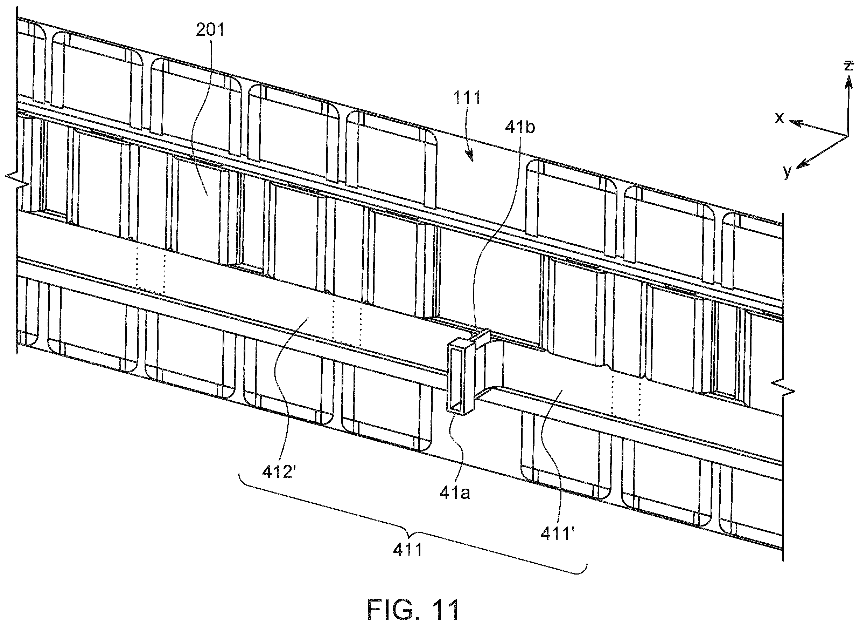

Further, the HV connector 20a includes a first connector plate C₁ electrically connected to the busbar 202a (included in the plurality of second busbars 202) being arranged in the first region B1 next to the center position marked by the dashed line A - A, and a second connector plate C₂ electrically connected to the busbar 202b (included in the plurality of second busbars 202) being arranged in the second region B2 next to the center position marked by the dashed line A-A. These connector plates C₁, C₂ protrude into the y-direction and are configured to protrude through the cut-out 1022a in the second beam 102, as already described above with reference to Figs. 9 and 11. On the other hand, between the pair of first busbars 201a, 201b arranged next to the center position marked by the dashed line A - A, an enlarged interstice L is provided, which is configured to receive the connector plates C₁, C₂ from another entity of the battery module 2 according to Fig. 9.

This way, the connector plates C₁, C₂ provide high-voltage paths for both sub-modules S1, S2, which enable a module-to-module connection (between two entities of the battery module 2 of Fig. 9), e. g., by simple rotation, relative to each other, of two entities of the battery module 2 to be connected, or by simply plunging these two entities of the battery modules 2 together. Then, after having connected a first entity of the battery module 2 to a second entity of the battery module 2, the connector plate C₁ establishes an electrical connection between the centered second busbar 202a of the first sub-module S1 of first entity with the centered first busbar 201a of the first sub-module S1 of the second entity. Correspondingly, the connector plate C₂ establishes an electrical connection between the centered second busbar 202b of the second sub-module S2 of first entity with the centered first busbar 201b of the second sub-module S2 of the second entity.

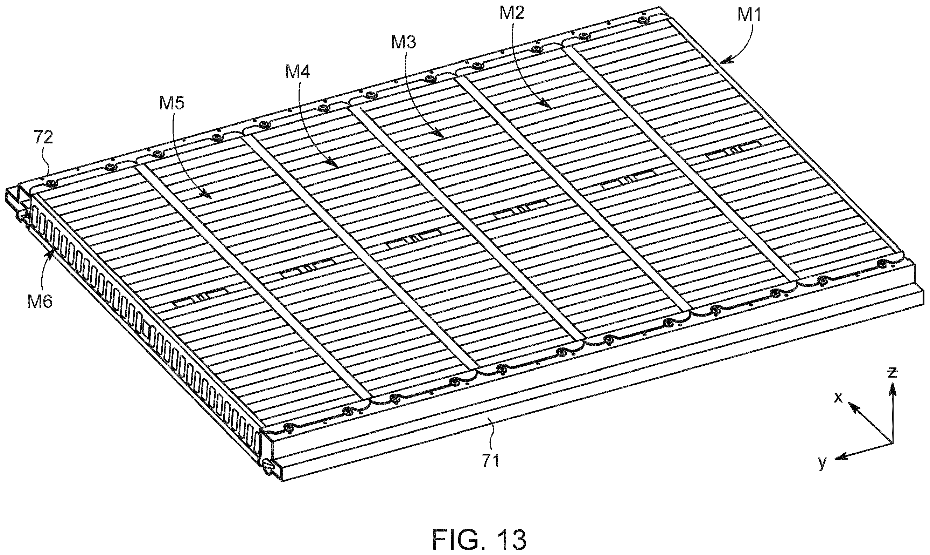

Hence, the above-described assembly of the battery module 2 of Fig. 9 allows for a rather simple and fast assembly of a battery pack 200 as illustrated in Figure 13, which includes six battery modules M1 to M6 according to the embodiment depicted in Fig. 9. While assembling the battery pack 200 of Fig. 13, one may start with the rightmost first battery module M1 (with regard to view provided by the drawing). Then, the second battery module M2 (in the order corresponding to the y-direction) can be attached to the first battery module M1 and electrically connected to the latter in the manner as described above with reference to Fig. 12. Correspondingly, the third battery module M3 is attached and electrically connected to the second battery module M2. The remaining battery modules M4, M5, and M6 are implemented similarly. Subsequently, a first protection element 71 is attached to the first end-plates 31 of the battery modules M1 to M6, the first end-plates 31 facing against the x-direction (not shown in Fig. 13; see Fig. 9), and a second protection element 71 is attached to the second end-plates 32 of the battery modules M1 to M6, the second end-plates 32 facing into the x-direction (not shown in Fig. 13; see Fig. 9). The first and second protection elements 71, 72 each extend parallel to the y-direction along the complete extension of the battery pack 200 with regard to the y-direction, thereby each forming a longitudinal crash absorbing structure protecting the battery modules M1 to M6 from outer impacts, in particular from shock loads.

### Reference signs

- 1, 2: battery module
- 10, 10': battery cell
- 10a, 10a': hardcase
- 11: first lateral side / first terminal side
- 12: second lateral side / second terminal side
- 13, 14: main sides
- 15: lower side
- 16: upper side
- 20: cell spacer including module management controller (MMC)
- 20a: connectors
- 21, 22: cell spacers
- 31, 32: end-plates
- 41,42: tapes
- 41': band
- 41a: band connector
- 41b: protrusion
- 51, 51: busbar covers
- 71, 72: protection elements
- 100: battery pack
- 101, 101': first beam
- 101a: first recesses
- 102: second beam
- 102a: second recesses
- 111: first busbar carrier
- 112: second busbar carrier
- 150a, 150b: supporting struts
- 151a, 151b: vertical portions of supporting struts
- 160: bottom plate
- 162a, 162b: support braces
- 164a, 164b: cross-braces
- 170: venting plate
- 180: cooling plate
- 190: lateral plate
- 190a: lower portion of lateral plate
- 190b: upper portion of lateral plate
- 201: first busbar(s)
- 301: first bolt or screw
- 302: second bolt or screw
- 311: first protrusion of first end-plate
- 312: second protrusion of first end-plate
- 400: bracket or bolt
- 1011a, 1011b: shoulders
- 1012: struts
- 1012': thick strut
- 1013a, 1013b: bore-holes
- 1116: snatch
- 1022': thick strut
- 1022a: cut-out

- A - A: dashed line
- B1, B2: regions
- C₁, C₂: connector plates
- M1, M2, M3, M4, M5, M6: battery modules
- O₁: first openings
- O₂: second openings
- S1, S2: sub-modules
- U1, U2, U3: pre-assembled units
- V: venting outlet
- x, y, z: axes of a Cartesian coordinate system

## Claims

1. A battery module (1, 2), comprising:
a stack of battery cells, the stack comprising a plurality of battery cells (10) arranged in a row along a predefined stack direction (x);
each of the battery cells (10) comprising a hardcase (10a) having a parallelepiped shape with a pair of main sides arranged opposite to each other, a first terminal side (11) and a second terminal side (12) arranged opposite to each other, and a lower side and an upper side (16) arranged opposite to each other;
each of the battery cells (10) comprising a first terminal (T₁) arranged on the first terminal side (11) and a second terminal arranged on the second terminal side, the first terminal (T₁) forming one electrical pole of the battery cell (10) and the second terminal forming the opposite electrical pole of the battery cell (10);
a first beam (101) comprising one or more first openings (O₁), and a second beam (102) comprising one or more second openings (O₂);
one or more first busbars (201), and one or more second busbars (202);
wherein each of the first beam (101) and the second beam (102) is arranged parallel to the stack direction (x) and has a first end pointing against the stack direction (x) and a second end pointing into the stack direction (x);
wherein the stack is arranged in between the first beam and the second beam;
wherein first terminal side (11) of each of the battery cells (10) faces the first beam (101), and wherein the second terminal side of each of the battery cells (10) faces the second beam (102);
wherein each of the first busbars (201) electrically connects, by means of at least two first connections, the first terminals (T₁) of at least two battery cells and is arranged between the stack and the first beam (101); and wherein each of the second busbars (202) electrically connects, by means of at least two second connections, the second terminals of at least two battery cells and is arranged between the stack and the second beam (102); and
wherein the first openings (O₁) are located at least at some of the positions of the first connections; and wherein the second openings (Oz) are located at least at some of the positions of the second connections.

2. The battery module (1, 2) according to claim 1,
further comprising a first end-plate (31) and a second end-plate (32);
wherein the first end-plate (31) is attached to the first end of the first beam (101) and the first end of the second beam (102), and abuts against the battery cell arranged at the first position in the row of battery cells when viewing into the stack direction (x); and
wherein the second end-plate (32) is attached to the second end of the first beam (101) and the second end of the second beam (102), and abuts against the battery cell arranged at the last position in the row of battery cells when viewing into the stack direction (x).

3. The battery module (1, 2) according to claim 1 or 2,
wherein the electrical polarity of the first terminals (T₁) alternates, when viewing into the stack direction (x);
wherein the sum of the number of the first busbars (201) and the number of the second busbars (202) equals to (N - 1), with N denoting the number of battery cells (10) comprised in the battery module (1, 2);
wherein, when viewing into the stack direction (x) and for each natural number k with 1 ≤ k < N/2, the first terminal of the (2k)-th battery cell is electrically connected, via one of the first busbars (201), to the first terminal of the (2k+1)-th battery cell; and
wherein, when viewing into the stack direction (x) and for each natural number k with 1 ≤ k ≤ N/2, the second terminal of the (2k - 1)-th battery cell is electrically connected, via one of the second busbars (202), to the second terminal of the (2k)-th battery cell.

4. The battery module (1, 2) according to any one of claims 1 to 3, the battery module (1, 2) further comprising:
a first cell connect unit, the first cell connect unit comprising a first busbar carrier (111) holding the first busbars (201); and/or
a second cell connect unit, the second cell connect unit comprising a second busbar (112) carrier holding the second busbars (202).

5. The battery module (1, 2) according to claim 4,
wherein the first cell connect unit is arranged between the stack and the first beam (101); and/or
wherein the second cell connect unit is arranged between the stack and the second beam (102).

6. The battery module (1, 2) according to any one of claims 1 to 5, further comprising:
a first cover (51) arranged on the side of the first beam, which faces away from the stack; and/or
a second cover (52) arranged on the side of the second beam, which faces away from the stack.

7. The battery module (1, 2) according to any one of claims 1 to 6,
wherein, for at least one pair of neighbored battery cells comprised in the stack, a cell spacer (20, 21, 22) is arranged between the battery cells of this pair.

8. The battery module (2) according to claim 7, wherein one of the cell spacers (20) comprises a module management controller.

9. The battery module (2) according to claim 8, as far as not depending on claim 3,
wherein the battery module (2) comprises a first sub-module (S1) and a second sub-module (S2), the first sub-module (S1) being separated from the second sub-module (S2) by the cell spacer (20) comprising the module management controller; and
wherein, when viewing into the stack direction (x), the first sub-module (S1) comprises the battery cells of the stack in front of the cell spacer (20) comprising the module management controller, and the second sub-module (S2) comprises the battery cells of the stack behind the cell spacer (20) comprising the module management controller.

10. The battery module according (1, 2) to any one of claims 1 to 9, wherein the battery cells (10) are each thermally connected to at least one module cooling plate.

11. The battery module (1, 2) according to any one of claims 1 to 9, further comprising:
a module venting plate (170) provided along the lower sides of the battery cells (10); and
a module cooling plate (180) provided along the upper sides (16) of the battery cells (10);
wherein each of the battery cells (10) abuts, with its lower side, against the module venting plate (170); and
wherein the module cooling plate (180) is thermally connected to each of the upper sides (16) of the battery cells (10).

12. A battery pack (100, 200) comprising at least one battery module (1, 2) according to any one of claims 1 to 11.

13. A vehicle comprising at least one battery module (1, 2) according to any one of claims 1 to 11 and/or at least one battery pack (100, 200) according to claim 12.

14. A method for assembling a battery module (1, 2) according to any one of claims 1 to 11, the method comprising the following steps:
a) providing a first beam (101) comprising one or more first openings (O₁), a second beam (102) comprising one or more second openings (O₂), one or more first busbars (201), one or more second busbars (202), and a plurality of battery cells (10), each of the battery cells (10) comprising a hardcase (10a) having a parallelepiped shape with a pair of main sides arranged opposite to each other, a first terminal side (11) and a second terminal side (12) arranged opposite to each other, and a lower side and an upper side (16) arranged opposite to each other, wherein each of the battery cells (10) comprises a first terminal (T₁) arranged on the first terminal side (11) and a second terminal arranged on the second terminal side (12);
b) arranging the battery cells (10) into a stack directed into a predefined stack direction (x) such that the main sides of each of the battery cells (10) are arranged perpendicular to the stack direction (x);
c) attaching the first busbars (201) to the first beam (101) at predefined positions, and attaching the second busbars (202) to the second beam (102) at predefined positions;
d-1) arranging the first beam (101) along the stack such that each of the first terminal sides (11) faces the first beam (101), wherein the first beam (101) is oriented such that the first busbars (201) are each positioned between the first beam (101) and the stack;
d-2) arranging the second beam (102) along the stack such that each of the second terminal sides (12) faces the second beam (102), wherein the second beam (102) is oriented such that the second busbars (202) are each positioned between the second beam (102) and the stack;
e-1) pushing the first beam (101) such onto the stack that the first busbars (201) abut against the first terminals (T₁) located in the area of the first busbars (201), and connecting the first busbars (201) to the first terminals (101) located in the area of the first busbars (201), wherein the connecting is performed using the access to the first busbars (201) provided by the first openings (O₁);
e-2) pushing the second beam (102) such onto the stack that the second busbars (202) abut against the second terminals located in the area of the second busbars (202), and connecting the second busbars (202) to the second terminals located in the area of the second busbars (202), wherein the connecting is performed using the access to the second busbars (202) provided by the second openings (O₂).

15. The method according to claim 14, wherein:
- step a) further comprises providing a first end-plate (31) and a second end-plate (32);
- step b) further comprises arranging the first end-plate (31) in front of the first battery cell, when viewing into the stack direction (x), and arranging the second end-plate (32) behind the last battery cell, when viewing into the stack direction (x);
- step b) further comprises pre-compressing the assembly of stacked battery cells (10), first and second end-plates (31, 32) with regard to the stack direction (x); and
wherein the method further comprises the following steps:
f) compressing or increasing the pre-compression of the assembly of stacked of battery cells (10), first and second end-plates (31, 32) with regard to the stack direction (x) such that each of the first and second end-plates (31, 32) comes into touch with the first and the second beam (101, 102);
g) fixing each of the first and second end-plate (31, 32) to each of the first and second beam (101, 102).

## Amended claims

### Amended claims in accordance with Rule 137(2) EPC.

1. A battery module (1, 2), comprising:
a stack of battery cells, the stack comprising a plurality of battery cells (10) arranged in a row along a predefined stack direction (x);
each of the battery cells (10) comprising a hardcase (10a) having a parallelepiped shape with a pair of main sides arranged opposite to each other, a first terminal side (11) and a second terminal side (12) arranged opposite to each other, and a lower side and an upper side (16) arranged opposite to each other;
each of the battery cells (10) comprising a first terminal (T₁) arranged on the first terminal side (11) and a second terminal arranged on the second terminal side, the first terminal (T₁) forming one electrical pole of the battery cell (10) and the second terminal forming the opposite electrical pole of the battery cell (10);
a first beam (101) comprising one or more first openings (O₁), and a second beam (102) comprising one or more second openings (O₂);
one or more first busbars (201), and one or more second busbars (202);
wherein each of the first beam (101) and the second beam (102) is arranged parallel to the stack direction (x) and has a first end pointing against the stack direction (x) and a second end pointing into the stack direction (x);
wherein the stack is arranged in between the first beam and the second beam;
wherein first terminal side (11) of each of the battery cells (10) faces the first beam (101), and wherein the second terminal side of each of the battery cells (10) faces the second beam (102);
wherein each of the first busbars (201) electrically connects, by means of at least two first connections, the first terminals (T₁) of at least two battery cells and is arranged between the stack and the first beam (101); and wherein each of the second busbars (202) electrically connects, by means of at least two second connections, the second terminals of at least two battery cells and is arranged between the stack and the second beam (102); and
wherein the first openings (O₁) are located at least at some of the positions of the first connections; and wherein the second openings (O₂) are located at least at some of the positions of the second connections; and
wherein the battery module (1, 2) further comprises: a first cell connect unit arranged between the stack and the first beam (101), the first cell connect unit comprising a first busbar carrier (111) holding the first busbars (201), and a second cell connect unit arranged between the stack and the second beam (102), the second cell connect unit comprising a second busbar carrier (112) holding the second busbars (202).

2. The battery module (1, 2) according to claim 1,
further comprising a first end-plate (31) and a second end-plate (32);
wherein the first end-plate (31) is attached to the first end of the first beam (101) and the first end of the second beam (102), and abuts against the battery cell arranged at the first position in the row of battery cells when viewing into the stack direction (x); and
wherein the second end-plate (32) is attached to the second end of the first beam (101) and the second end of the second beam (102), and abuts against the battery cell arranged at the last position in the row of battery cells when viewing into the stack direction (x).

3. The battery module (1, 2) according to claim 1 or 2,
wherein the electrical polarity of the first terminals (T₁) alternates, when viewing into the stack direction (x);
wherein the sum of the number of the first busbars (201) and the number of the second busbars (202) equals to (N - 1), with N denoting the number of battery cells (10) comprised in the battery module (1, 2);
wherein, when viewing into the stack direction (x) and for each natural number k with 1 ≤ k < N/2, the first terminal of the (2k)-th battery cell is electrically connected, via one of the first busbars (201), to the first terminal of the (2k+1)-th battery cell; and
wherein, when viewing into the stack direction (x) and for each natural number k with 1 ≤ k ≤ N/2, the second terminal of the (2k - 1)-th battery cell is electrically connected, via one of the second busbars (202), to the second terminal of the (2k)-th battery cell.

4. The battery module (1, 2) according to any one of claims 1 to 3, further comprising:
a first cover (51) arranged on the side of the first beam, which faces away from the stack; and/or
a second cover (52) arranged on the side of the second beam, which faces away from the stack.

5. The battery module (1, 2) according to any one of claims 1 to 4,
wherein, for at least one pair of neighbored battery cells comprised in the stack, a cell spacer (20, 21, 22) is arranged between the battery cells of this pair.

6. The battery module (2) according to claim 5, wherein one of the cell spacers (20) comprises a module management controller.

7. The battery module (2) according to claim 6, as far as not depending on claim 3,
wherein the battery module (2) comprises a first sub-module (S1) and a second sub-module (S2), the first sub-module (S1) being separated from the second sub-module (S2) by the cell spacer (20) comprising the module management controller; and
wherein, when viewing into the stack direction (x), the first sub-module (S1) comprises the battery cells of the stack in front of the cell spacer (20) comprising the module management controller, and the second sub-module (S2) comprises the battery cells of the stack behind the cell spacer (20) comprising the module management controller.

8. The battery module according (1, 2) to any one of claims 1 to 7, wherein the battery cells (10) are each thermally connected to at least one module cooling plate.

9. The battery module (1, 2) according to any one of claims 1 to 7, further comprising:
a module venting plate (170) provided along the lower sides of the battery cells (10); and
a module cooling plate (180) provided along the upper sides (16) of the battery cells (10);
wherein each of the battery cells (10) abuts, with its lower side, against the module venting plate (170); and
wherein the module cooling plate (180) is thermally connected to each of the upper sides (16) of the battery cells (10).

10. A battery pack (100, 200) comprising at least one battery module (1, 2) according to any one of claims 1 to 9.

11. A vehicle comprising at least one battery module (1, 2) according to any one of claims 1 to 9 and/or at least one battery pack (100, 200) according to claim 10.

12. A method for assembling a battery module (1, 2) according to any one of claims 1 to 9, the method comprising the following steps:
a) providing:
a first unit (U2) comprising a first beam (101) having one or more first openings (O₁) and being attached to a first busbar carrier (111) carrying a plurality of first busbars (201) at predefined positions;
a second unit (U3) comprising a second beam (102) having one or more second openings (O₂) and being attached to a second busbar carrier (112) carrying a plurality of second busbars (202) at predefined positions; and
a plurality of battery cells (10), each of the battery cells (10) comprising a hardcase (10a) having a parallelepiped shape with a pair of main sides arranged opposite to each other, a first terminal side (11) and a second terminal side (12) arranged opposite to each other, and a lower side and an upper side (16) arranged opposite to each other, wherein each of the battery cells (10) comprises a first terminal (T₁) arranged on the first terminal side (11) and a second terminal arranged on the second terminal side (12);
b) arranging the battery cells (10) into a stack directed into a predefined stack direction (x) such that the main sides of each of the battery cells (10) are arranged perpendicular to the stack direction (x);
c-1) arranging the first unit (U2) along the stack such that each of the first terminal sides (11) faces the first unit (U2), wherein the first unit (U2) is oriented such that the first busbars (201) are each positioned between the first beam (101) and the stack;
c-2) arranging the second unit (U3) along the stack such that each of the second terminal sides (12) faces the second unit (U3), wherein the second unit (U3) is oriented such that the second busbars (202) are each positioned between the second beam (102) and the stack;
d-1) pushing the first beam (101) such onto the stack that the first busbars (201) abut against the first terminals (T₁) located in the area of the first busbars (201), and connecting the first busbars (201) to the first terminals (101) located in the area of the first busbars (201), wherein the connecting is performed using the access to the first busbars (201) provided by the first openings (O₁);
d-2) pushing the second beam (102) such onto the stack that the second busbars (202) abut against the second terminals located in the area of the second busbars (202), and connecting the second busbars (202) to the second terminals located in the area of the second busbars (202), wherein the connecting is performed using the access to the second busbars (202) provided by the second openings (O₂).

13. The method according to claim 12, wherein:
- step a) further comprises providing a first end-plate (31) and a second end-plate (32);
- step b) further comprises arranging the first end-plate (31) in front of the first battery cell, when viewing into the stack direction (x), and arranging the second end-plate (32) behind the last battery cell, when viewing into the stack direction (x);
- step b) further comprises pre-compressing the assembly of stacked battery cells (10), first and second end-plates (31, 32) with regard to the stack direction (x); and wherein the method further comprises the following steps:
e) compressing or increasing the pre-compression of the assembly of stacked of battery cells (10), first and second end-plates (31, 32) with regard to the stack direction (x) such that each of the first and second end-plates (31, 32) comes into touch with the first and the second beam (101, 102);
f) fixing each of the first and second end-plate (31, 32) to each of the first and second beam (101, 102).
